(19) Europäisches Patentamt
European Patent Office
Office européen des brevets

(11) EP 0 934 385 B1

(12) **EUROPÄISCHE PATENTSCHRIFT**

(45) Veröffentlichungstag und Bekanntmachung des Hinweises auf die Patenterteilung:
**14.01.2004 Patentblatt 2004/03**

(21) Anmeldenummer: **97912198.5**

(22) Anmeldetag: **17.10.1997**

(51) Int Cl.[7]: **C11D 3/37**, C08G 73/02

(86) Internationale Anmeldenummer:
**PCT/EP1997/005744**

(87) Internationale Veröffentlichungsnummer:
**WO 1998/017764 (30.04.1998 Gazette 1998/17)**

(54) **VERWENDUNG VON WASSERLÖSLICHEN ODER IN WASSER DISPERGIERBAREN VERNETZTEN STICKSTOFFHALTIGEN VERBINDUNGEN IN WASCH- UND REINIGUNGSMITTELN**

USE OF WATER-SOLUBLE OR WATER-DISPERSIBLE CROSS-LINKED NITROGENATED COMPOUNDS IN WASHING AND CLEANING AGENTS

UTILISATION DANS DES DETERGENTS ET DES NETTOYANTS, DE COMPOSES CONTENANT DE L'AZOTE, RETICULES, SOLUBLES OU DISPERSIBLES DANS L'EAU

(84) Benannte Vertragsstaaten:
**DE ES FR GB IT NL**

(30) Priorität: **18.10.1996 DE 19643133**

(43) Veröffentlichungstag der Anmeldung:
**11.08.1999 Patentblatt 1999/32**

(73) Patentinhaber: **BASF AKTIENGESELLSCHAFT**
**67056 Ludwigshafen (DE)**

(72) Erfinder:
- **MEIXNER, Hubert**
  **D-67069 Ludwigshafen (DE)**
- **STEUERLE, Ulrich**
  **D-69124 Heidelberg (DE)**
- **DECKER, Jürgen**
  **D-67346 Speyer (DE)**
- **PAULUS, Wolfgang**
  **D-55128 Mainz (DE)**
- **BOECKH, Dieter**
  **D-67117 Limburgerhof (DE)**
- **LUX, Jürgen, Alfred**
  **D-67150 Niederkirchen (DE)**
- **EHLE, Beate**
  **D-67071 Ludwigshafen (DE)**

(74) Vertreter: **Isenbruck, Günter, Dr. et al**
**Isenbruck, Bösl, Hörschler, Wichmann, Huhn, Patentanwälte**
**Theodor-Heuss-Anlage 12**
**68165 Mannheim (DE)**

(56) Entgegenhaltungen:
**EP-A- 0 158 260**
**DE-A- 291 635**
**DE-A- 1 922 450**
**DE-A- 2 165 900**
**DE-A- 4 225 620**
**DE-A- 4 244 194**
**US-A- 3 200 106**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung von wasserlöslichen oder in Wasser dispergierbaren vernetzten stickstoffhaltigen Verbindungen in Wasch- und Reinigungsmitteln. Insbesondere betrifft die Erfindung die Verwendung von vernetzten Oligo- und Polyaminen als Soil Release-Mittel und Enzymstabilisatoren in Wasch- und Reinigungsmitteln.

Die Verwendung von stickstoffhaltigen Polymeren in Waschmitteln ist bekannt.

In der DE-A 31 24 210 sind flüssige Waschmittel mit Zusätzen zur Verhinderung der Farbstoffübertragung beschrieben. Das Waschmittel enthält dabei nicht-ionische oder zwitter-ionische Tenside in Kombination mit Polyethyleniminen, Polyaminen, Polyaminamiden oder Polyacrylamiden, durch die einer Farbstoffübertragung von farbigen Textilien auf weiße oder hellfarbige Textilien während des gemeinsamen Waschens entgegengewirkt wird. Die Polyaminamide sind durch Kondensation von mehrbasischen Säuren wie zweibasischen, gesättigten, aliphatischen $C_{3-8}$-Säuren und Polyaminen zugänglich. Die Polymere werden als wasserlöslich beschrieben, jedoch nicht genauer identifiziert.

In der DE-A 19 22 450 sind Wasch- und Reinigungsmittel beschrieben, die Vergrauungsinhibitoren zur Verhinderung einer Resorption von abgelöstem Schmutz auf den gereinigten Oberflächen enthalten. Als Vergrauungsinhibitor werden Polyamide verwendet, die herstellbar sind aus Polyethyleniminen mit einem mittleren Molekulargewicht von 300 bis 6000 und Di- und Tricarbonsäuren. Auch Umsetzungsprodukte mit Diglykolsäure, Thiodiglykolsäure, Aminodiessigsäure und Nitrilotriessigsäure werden erwähnt.

In der DE-A 21 65 900 sind Waschmittel mit einem Gehalt an vergrauungsverhütenden Zusätzen beschrieben. Als Vergrauungsinhibitor wird das Umsetzungprodukt eines Polyethylenimins mit einem Molekulargewicht von 430 bis 10.000 mit $C_{8-18}$-Alkylglycidethern verwendet, das weiterhin mit Ethylenoxid umgesetzt sein kann.

DE-A-19 22 450 betrifft Wasch- und Reinigungsmittel, die bestimmte Vergrauungsinhibitoren enthalten. Die Wirkung der Vergrauungsinhibitoren ist von einer Soil-Release-Wirkung unterschiedlich. Sie ist ein Primärwascheffekt und zeigt sich durch ein verbessertes Schmutztragevermögen der Waschflotten, so dass eine erneute Ablagerung der Schmutzteilchen verhindert wird. Es werden wasserlösliche oder in Wasser dispergierbare Polyamide eingesetzt, die durch Umsetzung von Polyethylenimin oder Polypropylenimin mit Di- und/oder Tricarbonsäuren, die 2 bis 10 Kohlenstoffatome im Molekül enthalten, erhalten werden. Neben den üblichen Di- und Tricarbonsäuren, wie Oxal-, Malon-, Bernstein-, Glutar-, Adipinsäure usw. können auch Heteroatome enthaltende Carbonsäuren eingesetzt werden. Ein Beispiel dafür ist Diglykolsäure.

EP-A-0 158 260 betrifft Textil-Waschmittel für farbige Textilien. Die Waschmittel enthalten spezielle Zusatzstoffe mit verfärbungsinhibierender Wirkung, die ein Verfärben beim gleichzeitigen Waschen von farbigen und weißen Textilien verhindern. Es können beispielsweise die in DE-A-19 22 450 beschriebenen Verbindungen eingesetzt werden. In den Beispielen werden Kondensationsprodukte von Adipinsäure und Polyethylenimin aufgeführt.

DE-A-42 25 620 betrifft Umsetzungsprodukte von mehrbasischen Carbonsäuren mit Aminogruppen enthaltenden Verbindungen und ihre Verwendung in Wasch- und Reinigungsmitteln. Die Umsetzungsprodukte enthalten als Säurekomponente Zitronensäure, Isozitronensäure, Aconitsäure, Itaconsäure und/oder Weinsäure, die jeweils gegebenenfalls neutralisiert sein können. Als Aminkomponente können beispielsweise Polyethylenimine eingesetzt werden. Die Verbindungen können zur Clay-Dispergierung und als Inkrustationsinhibitoren in Waschmitteln eingesetzt werden.

DE-A-42 44 194 betrifft wasserlösliche Kondensationsprodukte aus Aminogruppen enthaltenden Verbindungen und Vernetzern und deren Verwendung als Entwässerungs-, Flockungs- und Retentionsmittel bei der Herstellung von Papier. Bei den eingesetzten Produkten handelt es sich um Umsetzungsprodukte von u.a. Polyalkylenpolyaminen und Glycidylverbindungen sowie bifunktionellen Vernetzern, die als funktionelle Gruppe eine Glycidyleinheit aufweisen können. Im Beispiel werden als Aminkomponente Ethylenpropylentriamin und Ethylendipropylentetramin erwähnt.

DE-A-29 16 356 betrifft Verfahren zur Herstellung von wasserlöslichen Polyetheraminen. Die Produkte werden durch Umsetzung von Di- oder Polyaminen mit Chlorhydrinethern erhalten. Sie werden als Flockungsmittel, Retentionsmittel und Entwässerungshilfsmittel bei der Herstellung von Papier eingesetzt. Unter den einsetzbaren Aminen werden Polyethylenimin und Polypropylenimin aufgeführt. Gemäß den Beispielen werden Ethylendiamin, Diaminopropylethylendiamin und Diaminopropylamin eingesetzt.

Es ist weiterhin bekannt, in Waschmitteln Soil Release-Mittel zu verwenden, die beim Waschprozeß aus der Waschflotte auf das Textilgut bzw. die Fasern des Textilguts reversibel aufziehen. Wird ein mit einem solchen Soil Release-Mittel behandeltes Textilgut verschmutzt, so bewirkt das aufgezogene Soil Release-Mittel bei der nachfolgenden Wäsche eine verbesserte Ablösung des Schmutzes. Diese Soil Release-Wirkung ist somit eine reversible Anti-Schmutz-Ausrüstung des Textilguts beim Waschen. Verschiedene Soil Release- Mittel sind bekannt, wie Polyester aus Polyethylenoxiden mit Ethylenglykol und/oder Propylenglykol und aromatischen und/oder aliphatischen Dicarbonsäuren. Beispielsweise ist in der DE-A-43 44 357 ein schmutzablösendes Polymer beschrieben, welches Ethylenglykolterephthalatgruppen und Polyethylenglykolterephthalatgruppen aufweist.

Weiterhin wurden modifizierte Cellulosen, wie Methylcellulose, Hydroxypropylcellulose oder Carboxymethylcellulose eingesetzt. In der US 4,138,352 ist die Kombination eines nicht-ionischen Tensides und einer hydroxybutylierten Methylcellulose mit niedrigem Molekulargewicht als Soil Release-Mittel beschrieben.

In der EP-A 0 042 187 sind Detergenszusammensetzungen beschrieben, die geringe Mengen an substituierten Polyaminen enthalten. Die Polyamine sind dabei durch einen langkettigen Alkyl- oder Alkenylrest substituiert. Sie können zudem durch mindestens zwei Alkylenoxidreste an unterschiedlichen Stickstoffatomen substituiert sein. Die Zusammensetzungen zeigen insbesondere verbesserte Soil Release-Eigenschaften.

Aufgabe der vorliegenden Erfindung ist die Bereitstellung von Soil Release-Mitteln für Wasch- und Reinigungsmittel, die vorzugsweise gleichzeitig als Enzymstabilisatoren wirken und ein vorteilhaftes Eigenschaftsprofil aufweisen.

Diese Aufgabe wird erfindungsgemäß gelöst durch ein Produkt gemäß Anspruch 1.

Die erfindungsgemäßen stickstoffhaltigen Verbindungen werden dabei vorzugsweise als Soil Release-Mittel und/oder als Enzymstabilisatoren verwendet. Die Soil Release-Wirkung beruht dabei vermutlich auf dem vorstehend beschriebenen Aufziehen des Mittels aus der Waschflotte auf das Textilgut. Die Soil Release-Wirkung bzw. der Soil Release-Effekt zeigt sich somit bei mehrmaligem Waschen. Er ist zu unterscheiden vom Primärwasch- oder Soil Removal-Effekt. Der Soil Removal-Effekt bezieht sich auf eine Ablösung des Schmutzes direkt beim ersten Waschen eines angeschmutzten, nicht vorbehandelten Gewebes. Mit Ethylenoxid ethoxilierte Polyamine zeigen oft einen Primärwasch- oder Soil Removal-Effekt. Überraschenderweise wurde gefunden, daß insbesondere über Polyetherketten vernetzte Oligo- und Polyamine Soil Release-Eigenschaften zeigen. Die zusätzliche enzymstabilisierende Wirkung war nicht zu erwarten, da bislang hauptsächlich Borsäurederivate mit Polyolen und Alkyl- bzw. Arylboronsäuren als stabilisierende Zusätze eingesetzt wurden.

Die erfindungsgemäß eingesetzten Verbindungen zeigen dabei die vorteilhaften Eigenschaften in einer Vielzahl von Waschmittelformulierungen, wie Vollwaschmitteln oder Colortextilwaschmitteln, die in flüssiger oder fester Form vorliegen können.

__Verbindungen (a)__

Die erfindungsgemäß zur Vernetzung verwendeten Polyethylenimine haben vorzugsweise eine mittlere Molmasse ($M_w$) von mindestens 300.

Bevorzugt sind Polyethyleniminhornopolymerisate mit einem Polymerisationsgrad n von 5, 6, 10, 20, 35 und 100. Diese Polyethyleniminhomopolymerisate können entweder wasserhaltig oder wasserfrei hergestellt werden oder entwässert werden. Die Synthese entsprechender Polyethylenimine ist in den Beispielen beschrieben.

Die Polyethylenimine können ferner teilmodifiziert sein, wie beispielsweise gemäß einer Ausführungsform der Erfindung mit Benzoesäure hydrophobiert sein.

Gemäß einer Ausführungsform der Erfindung ist Komponente (a) ausgewählt aus Aminen der allgemeinen Formel (II)

$$(R^1R^1)N\text{-}X\text{-}N(R^1R^1) \qquad \text{(II)}$$

wobei die Reste $R^1$ Reste $(R^2R^2)N\text{-}(CH_2)_n\text{-}$ sind,
die Reste $R^2$ Wasserstoffatome sind oder Reste $(R^3R^3)N\text{-}(CH_2)_n\text{-}$,
die Reste $R^3$ Wasserstoffatome sind oder Reste $(R^4R^4)N\text{-}(CH_2)_n\text{-}$,
die Reste $R^4$ Wasserstoffatome sind oder Reste $(R^5R^5)N\text{-}(CH_2)_n\text{-}$,
die Reste $R^5$ Wasserstoffatome sind oder Reste $(R^6R^6)N\text{-}(CH_2)_n\text{-}$,
die Reste $R^6$ Wasserstoffatome sind,
n einen Wert von 2, 3 oder 4 hat und
der Rest X einer der Reste

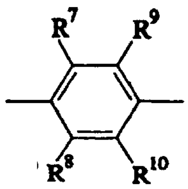 , 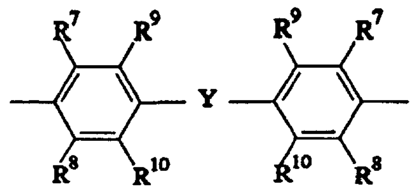 ,

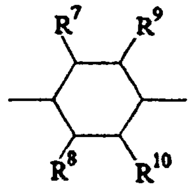 , 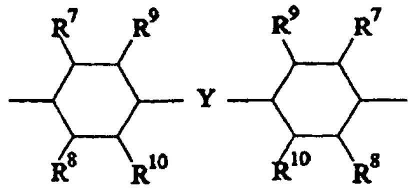 ,

$-(CH_2)_p-$, $-(CH_2)_3-NR^{11}-(CH_2)_3-$, $-(CH_2)_l-[O-(CH_2)_k]_m-O-(CH_2)_l-C_{2-20}$-Alkylen, der Rest Y ein Sauerstoffatom, ein Rest $CR^7R^9C=O$ oder $SO_2$ ist, p einen ganzzahligen Wert von 2 - 20 hat, l und k unabhängig voneinander einen ganzzahligen Wert von 2 - 6 haben, m einen ganzzahligen Wert von 1 - 40 hat, die Reste $R^7$, $R^8$, $R^9$ und $R^{10}$ unabhängig voneinander Wasserstoffatome sind oder $C_{1-6}$-Alkylreste, und der Rest $R^{11}$ ein $C_{1-20}$-Alkylrest, $C_{2-20}$-Dialkylamino-$C_{2-10}$-alkylrest, $C_{1-10}$-Alkoxy-$C_{2-10}$-alkylrest, $C_{2-20}$-Hydroxyalkylrest, $C_{3-12}$-Cycloalkylrest, $C_{4-20}$-Cycloalkyl-alkylrest, $C_{2-20}$-Alkenylrest, $C_{4-30}$-Dialkylaminoalkenylrest, $C_{3-30}$-Alkoxy-alkenylrest, $C_{3-20}$-Hydroxyalkenylrest, $C_{5-20}$-Cycloalkylalkenylrest, ein gegebenenfalls durch einen $C_{1-8}$-Alkylrest, $C_{2-8}$-Dialkylaminorest, $C_{1-8}$-Alkoxyrest, Hydroxylrest, $C_{3-8}$-Cycloalkylrest und/oder $C_{4-12}$-Cycloalkylalkylrest ein-bis fünffach substituierter Arylrest oder $C_{7-20}$-Aralkylrest ist oder zwei Reste $R^{11}$ gemeinsam eine gegebenenfalls durch Stickstoff oder Sauerstoff unterbrochene Alkylenkette ergeben, wie aus Ethylenoxid, Propylenoxid, Butylenoxid und $-CH_2-CH(CH_3)-O-$ oder Polyisobutylen mit 1 bis 100 iso-Butyleneinheiten,

Die Reste $R^7$, $R^8$, $R^9$, $R^{10}$ der allgemeinen Formel II bedeuten $C_{1-6}$-Alkylreste, bevorzugt $C_{1-3}$-Alkylreste, wie Methyl-, Ethyl-, n-Propyl- und iso-Propylreste, besonders bevorzugt Methyl- und Ethylreste, insbesondere Methylreste, oder vorzugsweise Wasserstoff, wobei die Reste $R^7$ und $R^8$ bzw. $R^9$ und $R^{10}$ vorzugsweise gleich sind.

Beispiele für erfindungsgemäße Reste $R^{11}$ sind $C_{1-20}$-Alkylreste, vorzugsweise $C_{1-12}$-Alkylreste, wie Methyl-, Ethyl-, n-Propyl-, iso-Propyl-, n-Butyl-, iso-Butyl-, sec.-Butyl-, tert.-Butyl-, n-Pentyl-, iso-Pentyl-, sec-Pentyl-, neo-Pentyl-, 1,2-Dimethylpropyl-, n-Hexyl-, iso-Hexyl-, sec-Hexyl-, n-Heptyl-, iso-Heptyl-, n-Octyl-, iso-Octyl-, n-Nonyl-, iso-Nonyl-, n-Decyl-, iso-Decyl-, n-Undecyl-, iso-Undecyl-, n-Dodecyl- und iso-Dodecylreste, besonders bevorzugt $C_{1-4}$-Alkylreste, wie Methyl-, Ethyl-, n-Propyl-, iso-Propyl-, n-Butyl-, iso-Butyl-, sec.-Butyl- und tert.-Butylreste, Arylreste, wie Phenyl-, 1-Naphthyl- und 2-Naphthylreste, bevorzugt Phenylreste, $C_{7-20}$-Aralkylreste, bevorzugt $C_{7-12}$-Phenylalkylreste, wie Benzyl-, 1-Phenethyl-, 2-Phenethyl-, 1-Phenylpropyl-, 2-Phenylpropyl-, 3-Phenylpropyl-, 1-Phenylbutyl-, 2-Phenylbutyl, 3-Phenylbutyl- und 4-Phenylbutylreste, besonders bevorzugt Benzyl-, 1-Phenethyl- und 2-Phenethylreste, $C_{7-20}$-Alkylarylreste, bevorzugt $C_{7-12}$-Alkylphenylreste, wie 2-Methylphenyl-, 2-Methylphenyl-, 4-Methylphenyl-, 2,4-Dimethylphenyl-, 2,5-Dimethylphenyl-, 2,6-Dimethylphenyl-, 3,4-Dimethylphenyl-, 3,5-Dimethylphenyl-, 2,3,4-Trimethylphenyl-, 2,3,4,5-Trimethylphenyl-, 2,3,6-Trimethylphenyl-, 2,4,6-Tri-methylphenyl-, 2-Ethyl-phenyl-, 3-Ethylphenyl-, 4-Ethylphenyl-, 2-i-Propyl-phenyl-, 3-n-Propylphenyl- und 4-n-Propylphenylreste oder Polyisobutylenreste mit 1-100, bevorzugt 1-70, besonders bevorzugt 1-50 iso-Butyleneinheiten.

Die Herstellung der Amine gemäß allgemeiner. Formel (II) erfolgt vorzugsweise nach dem in WO 96/15097 beschriebenen Verfahren.

Sie werden vorzugsweise aus Diaminen der allgemeinen Formel $NH_2-(CH_2)_n-NH_2$ hergestellt, in der n einen ganzzahligen Wert von 2 bis 20 hat. Beispiele geeigneter solcher Diamine sind 1,2-Ethylendiamin, 1,3-Propylendiamin, 1,4-Butylendiamin und 1,6-Hexamethylendiamin. Ebenso werden bevorzugt primäre Tetraaminoalkylalkylendiamine eingesetzt, wie N,N,N',N'-Tetraaminopropyl-1,2-ethylendiamin, N,N,N',N'-Tetraaminopropyl-1,3-propylendiamin, N,N, N',N'-Tetraaminopropyl-1,4-butylendiamin und N,N,N',N'-Tetraaminopropyl-1,6-hexamethylendiamin.

Bevorzugte Beispiele erfindungsgemäßer Amine (II), die auch als dendrimere Amine bezeichnet werden, bzw. deren Vorstufen, sind N,N,N',N'-Tetraaminopropylethylendiamin, im folgenden als N6-Amin bezeichnet, sowie die daraus durch Aminopropylierung herstellbaren, nach der Anzahl ihrer N-Atome bezeichneten dendrimeren Amine wie N14-, N30-, N62- und N128-Amin der BASF AG. Diese Amine weisen ein Ethylendiamin-Grundgerüst auf, dessen Wasserstoffatome am Stickstoff durch Amino(n-propyl)reste substituiert sind. Die dabei endständigen Aminogruppen können wiederum durch entsprechende Aminopropylgruppen substituiert sein (N14-Amin), usw.. Herstellungsverfahren für diese Amine sind in WO 96/15097 beschrieben, ausgehend von Ethylendiamin. Ebenfalls bevorzugte Beispiele dieser erfindungsgemäßen Amine sind entsprechende N-Amine, wie sie in WO 93/14147 beschrieben sind, die ausgehend von Butylendiamin statt wie vorstehend Ethylendiamin hergestellt sind. Solche Amine werden von der DSM N. V. mit Sitz in den Niederlanden hergestellt und vertrieben.

Bevorzugte Verbindungen (a) sind N,N,N',N'-Tetraaminopropyl-1,2-ethylendiamin oder Polyethylenimin mit einem Polymerisationsgrad von 5 bis 100, vorzugsweise 5 bis 50.

## Vernetzer (b)

Die vorstehend beschriebenen stickstoffhaltigen Verbindungen werden mit mindestens einem mindestens bifunktionellen Vernetzer, der mit NH-Gruppen reagiert, zu wasserlöslichen oder in Wasser dispergierbaren, vernetzten stickstoffhaltigen Verbindungen umgesetzt. Vernetzer (b) sind Polyalkylenglykolbisglycidylether, die hergestellt werden aus Bischlorhydrinen von Polyethylenglykolen, unter alkalischen Bedingungen.
Die polymeren Vernetzer weisen ein Gewichtsmittel des Molekulargewichts von 300 bis 3.000, auf.

## Herstellung der vernetzten stickstoffhaltigen Verbindungen

Die erfindungsgemäßen wasserlöslichen Umsetzungsprodukte sind dadurch erhältlich, daß man die Verbindungen der Komponente (a) mit den Vernetzern der Komponente (b) umsetzt. Die Umsetzung wird vorzugsweise in wäßrigem Medium durchgeführt. Die Kondensation der Komponenten (a) und (b) wird beispielsweise in einem Temperaturbereich von 0 bis 240°C, vorzugsweise 20 bis 160°C, durchgeführt. Falls man die Kondensation in einer wäßrigen Lösung vornimmt und bei Temperaturen oberhalb des Siedepunktes des Wassers arbeitet, führt man die Reaktion in druckdicht verschlossenen Apparaturen durch. Die Kondensation kann jedoch auch in Substanz oder gegenüber den Reaktionspartnern inerten Lösungsmitteln wie z.B. hochsiedenden Ethem (Diethylenglykoldimethylether), Tetrahydrofuran, Polyolen, Toluol, Xylolen, anderen hochsiedenden substituierten Aromaten oder handelsüblichen Kohlenwasserstonfffraktionen mit einem Siedebereich von 50 bis 300°C vorgenommen werden. Beim Kondensieren in wäßriger Lösung beträgt der pH-Wert des Reaktionsgemisches beispielsweise 2 bis 12, vorzugsweise 5 bis 11. In den meisten Fällen wird bei dem pH-Wert kondensiert, der sich beim Lösen der Reaktionspartner in Wasser einstellt. Die Konzentration der entstehenden wasserlöslichen Kondensationsprodukte in der wäßrigen Lösung beträgt beispielsweise 10 bis 90 Gew.-% und liegt vorzugsweise im Bereich von 20 bis 80 Gew.-%. Als wasserlöslich werden solche Umsetzungsprodukte betrachtet, die eine mindestens 5 gew.-% ige Lösung in Wasser bei Raumtemperatur bilden können. Die Kondensation der Verbindungen der Komponenten (a) und (b) wird vorzugsweise in wäßriger Lösung vorgenommen und so geführt, daß wasserlösliche Kondensationsprodukte entstehen, die in 20 gew.-% iger wäßriger Lösung bei 20°C eine Viskosität von mindestens 100 mPas, vorzugsweise 100 bis 15,000 mPas, haben (gemessen bei 20°C und pH 7 in einem Brookfield-Viskosimeter).
Bei der Kondensation setzt man beispielsweise Mischungen um, die 50 bis 99,9 Gew.-%, vorzugsweise 60 bis 99,5 Gew.-%, mindestens einer Verbindung der Komponente (a) und 0,1 bis 50 Gew.-%, vorzugsweise 0,5 bis 40 Gew.-%, mindestens einer Verbindung der Komponente (b) enthalten, wobei die Summe aus den Komponenten (a) und (b) immer 100 Gew.-% beträgt.
Insbesondere bei Verwendung von Oligoaminen oder Polyaminen und bisfunktionalisierten Polyethylenglykolblöcken entsteht je nach Reaktionsbedingungen und Molverhältnis ein Polymer mit Netzwerkstruktur, aufgebaut aus aminischen und Polyethylenglykol-Blöcken definierter Größe, Kettenlänge und Molgewichtsverteilung. Die erfindungsgemäßen Verbindungen verbessern die Schmutzablösung beim Waschen von Textilien zum einen durch die Soil Release-Eigenschaften. zum anderen durch die enzymstabilisierende Wirkung, die die Wirksamkeit der Enzyme erhöht. In modernen Waschmitteln enthaltene Enzyme, wie Proteasen, Lipasen, Cellulasen, Amylasen und Peroxidasen, die der Verbesserung der Waschleistung dienen, sind in der Waschmittelformulierung destabilisierenden und desaktivierenden Bedingungen ausgesetzt. Diese Bedingungen können durch verschiedene Bestandteile der Formulierung, wie beispielsweise das Tensidsystem, das Bleichsystem, die Alkalien usw. ausgelöst sein. Insbesondere in flüssigen Waschmittelformulierungen tritt dieses Problem häufig auf, da durch die Mobilität der Waschmittelinhaltsstoffe die Enzyme nicht vor dem Kontakt geschützt sind. Die erfindungsgemäßen vernetzten Verbindungen führen hier zu einer Stabilisierung bzw. zu einem Erhalt der Enzyme, die somit ihre volle Wirkung im Waschprozeß entfalten können.
Bei Zusatz schon geringer Mengen der erfindungsgemäßen vernetzten Polyamine, werden die schmutzlösenden Eigenschaften von Colorwaschmittel-, Vollwaschmitteloder Kompaktwasctunittel-Formulierungen verbessert. Die erfindungsgemäßen Verbindungen ziehen wahrscheinlich aus der Waschflotte auf das Textilgut auf. Bei Verschmutzung eines so behandelten Textilgutes bewirken die auf das Textilgut aufgebrachten Verbindungen bei der nachfolgenden Wäsche eine deutlich verbesserte Schmutzablösung. Die erfindungsgemäßen Verbindungen sind insbesondere wirksam an Anschmutzungen, die aus einer Kombination von fett- bzw. ölartigem Schmutz und Pigment/Partikel-Teilchen bestehen, wie beispielsweise Anschmutzungen aus gebrauchtem Motoröl, Lippenstift, Make-up oder Schuhcreme. Insbesondere vorteilhaft sind die Verbindungen bei der Reinigung von Polyestergeweben oder polyesterhaltigen Geweben.
Die Erfindung betrifft somit auch Wasch- und Reinigungsmittel, enthaltend mindestens eine vernetzte stickstoffhaltige Verbindung, wie sie vorstehend definiert ist, und mindestens ein Tensid. Vorzugsweise enthält das Wasch- und Reinigungsmittel zusätzlich mindestens ein Enzym.
Diese Waschmittel können erfindungsgemäß zum Waschen von Textilien verwendet werden.
Die erfindungsgemäßen Waschmittel können ferner die üblichen in Waschmitteln verwendeten Bestandteile

enthalten, wie Builder, Tenside, Bleichmittel, Enzyme und weitere Inhaltsstoffe, wie sie nachstehend beschrieben sind.

**Builder**

Zur Kombination mit den erfindungsgemäßen (Polyalkylenpoly)aminen geeignete anorganische Builder (A) sind vor allem kristalline oder amorphe Alumosilicate mit ionenaustauschenden Eigenschaften wie insbesondere Zeolithe. Verschiedene Typen von Zeolithen sind geeignet, insbesondere Zeolithe A, X, B, P, MAP und HS in ihrer Na-Form oder in Formen, in denen Na teilweise gegen andere Kationen wie Li, K, Ca, Mg oder Ammonium ausgetauscht ist. Geeignete Zeolithe sind beispielsweise beschrieben in EP-A-0 038 591, EP-A-0 021 491. EP-A-0 087 035, US 4,604,224, GB-A 2 013 259, EP-A-0 522 726, EP-A-0 384 070 und WO 94/24251.

Geeignete kristalline Silicate (A) sind beispielsweise Disilicate oder Schichtsilicate, z. B. SKS-6 (Hersteller: Hoechst AG). Die Silicate können in Form ihrer Alkalimetall-, Erdalkalimetall- oder Ammoniumsalze eingesetzt werden, vorzugsweise als Na-, Li- und Mg-Silicate.

Amorphe Silicate wie Natriummetasilicat, welches eine polymere Struktur aufweist, oder Britesil® H20 (Hersteller: Akzo N.V. mit Sitz in den Niederlanden) sind ebenfalls verwendbar.

Geeignete anorganische Buildersubstanzen auf Carbonat-Basis sind Carbonate und Hydrogencarbonate. Diese können in Form ihrer Alkalimetall-, Erdalkalimetall oder Ammoniumsalze eingesetzt werden. Vorzugsweise werden Na-, Li- und Mg-Carbonate bzw. -Hydrogencarbonate, insbesondere Natriumcarbonat und/oder Natriumhydrogencarbonat, eingesetzt.

Übliche Phosphate als anorganische Builder sind Polyphosphate wie Pentanatriumtriphosphat.

Die genannten Komponenten (A) können einzeln oder in Mischungen untereinander eingesetzt werden. Von besonderem Interesse ist als anorganische Builder-Komponente eine Mischung aus Alumosilicaten und Carbonaten, insbesondere aus Zeolithen, vor allem Zeolith A, und Alkalimetallcarbonaten, vor allem Natriumcarbonat, im Gew. -Verhältnis von 98:2 bis 20:80, insbesondere von 85:15 bis 40:60. Neben dieser Mischung können noch andere Komponenten (A) vorliegen.

In einer bevorzugten Ausführungsform enthält die erfindungsgemäße Textilwaschmittel-Formulierung 0,1 bis 20 Gew.-%. insbesondere 1 bis 12 Gew.-% organische Cobuilder (B) in Form von niedermolekularen, oligomeren oder polymeren Carbonsäuren, insbesondere Polycarbonsäuren, oder Phosphonsäuren oder deren Salzen, insbesondere Na- oder K-Salzen.

Geeignete niedermolekulare Carbonsäuren oder Phosphonsäuren für (B) sind beispielsweise:

$C_4$- bis $C_{20}$-Di-, -Tri- und -Tetracarbonsäuren wie Bernsteinsäure, Propantricarbonsäure, Butantetracarbonsäure, Cyclopentantetracarbonsäure und Alkylund Alkenylbernsteinsäuren mit $C_2$- bis $C_{16}$-Alkyl- bzw. -Alkenyl-Resten;

$C_4$- bis $C_{20}$-Hydroxycarbonsäuren wie Äpfelsäure, Weinsäure, Gluconsäure, Glutarsäure, Citronensäure, Lactobionsäure und Saccharosemono-, -di- und -tricarbonsäure;

Aminopolycarbonsäuren wie Nitrilotriessigsäure, β-Alanindiessigsäure, Ethylendiamintetraessigsäure, Serindiessigsäure, Isoserindiessigsäure, Methylglycindiessigsäure und Alkylethylendiamintriacetate;

Salze von Phosphonsäuren wie Hydroxyethandiphosphonsäure.

Geeignete oligomere oder polymere Carbonsäuren für (B) sind beispielsweise:

Oligomaleinsäuren, wie sie beispielsweise in EP-A 0 451 508 und EP-A 0 396 303 beschrieben sind;

Co- und Terpolymere ungesättigter $C_4$-$C_8$-Dicarbonsäuren, wobei als Comonomere monoethylenisch ungesättigte Monomere
aus der Gruppe (i) in Mengen von bis zu 95 Gew.-%,
aus der Gruppe (ii) in Mengen von bis zu 60 Gew.-% und
aus der Gruppe (iii) in Mengen von bis zu 20 Gew.-%
einpolymerisiert sein können.

Als ungesättigte $C_4$-$C_8$-Dicarbonsäuren sind hierbei beispielsweise Maleinsäure, Fumarsäure, Itaconsäure und Citraconsäure geeignet. Bevorzugt ist Maleinsäure.

Die Gruppe (i) umfaßt monoethylenisch ungesättigte $C_3$-$C_8$-Monocarbonsäuren wie Acrylsäure, Methacrylsäure, Crotonsäure und Vinylessigsäure. Bevorzugt werden aus der Gruppe (i) Acrylsäure und Methacrylsäure eingesetzt.

Die Gruppe (ii) umfaßt monoethylenisch ungesättigte $C_2$-$C_{22}$-Olefine, Vinylalkylether mit $C_1$-$C_8$-Alkylgruppen, Styrol, Vinylester von $C_1$-$C_8$-Carbonsäuren, (Meth)acrylamid und Vinylpyrrolidon. Bevorzugt werden aus der Gruppe (ü) $C_2$-$C_6$-Olefine, Vinylalkylether mit $C_1$-$C_4$-Alkylgruppen, Vinylacetat und Vinylpropionat eingesetzt.

Die Gruppe (iii) umfaßt (Meth)acryiester von $C_1$- bis $C_8$-Alkoholen, (Meth)acrylnitril, (Meth)acrylamide von $C_1$- bis $C_8$-Aminen, N-Vinylformamid und Vinylimidazol.

Falls die Polymeren der Gruppe (ii) Vinylester einpolymerisiert enthalten, können diese auch teilweise oder vollständig zu Vinylalkohol-Struktureinheiten hydrolysiert vorliegen. Geeignete Co- und Terpolymere sind beispielsweise aus US 3,887,806 sowie DE-A 43 13 909 bekannt.

Als Copolymere von Dicarbonsäuren eignen sich für die Komponente (B) vorzugsweise:

Copolymere von Maleinsäure und Acrylsäure im Gewichtsverhältnis 100:90 bis 95:5, besonders bevorzugt solche im Gewichtsverhältnis 30:70 bis 90:10 mit Molmassen von 100.000 bis 150.000;

Terpolymere aus Maleinsäure, Acrylsäure und einem Vinylester einer $C_1$-$C_3$-Carbonsäure im Gewichtsverhältnis 10 (Maleinsäure):90 (Acrylsäure + Vinylester) bis 95 (Maleinsäure):10 (Acrylsäure + Vinylester), wobei das Gewichtsverhältnis von Acrylsäure zum Vinylester im Bereich von 30:70 bis 70:30 variieren kann;

Copolymere von Maleinsäure mit $C_2$-$C_8$-Olefinen im Molverhältnis 40:60 bis 80:20, wobei Copolymere von Maleinsäure mit Ethylen, Propylen oder Isobuten im Molverhältnis 50:50 besonders bevorzugt sind.

Pfropfpolymere ungesättigter Carbonsäuren auf niedermolekutare Kohlenhydrate oder hydrierte Kohlenhydrate, vgl. US 5,227,446, DE-A 44 15 623 und DE-A 43 13 909, eignen sich ebenfalls als Komponente (B).

Geeignete ungesättigte Carbonsäuren sind hierbei beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die in Mengen von 40 bis 95 Gew.-%, bezogen auf die zu pfropfende Komponente, aufgepfropft werden.

Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomere der Gruppen (ii) und (iii).

Als Pfropfgrundlage sind abgebaute Polysaccharide wie saure oder enzymatisch abgebaute Stärken, Inuline oder Zellulose, Eiweißhydrolysate und reduzierte (hydrierte oder hydrierend aminierte) abgebaute Polysaccharide wie Mannit, Sorbit, Aminosorbit und N-Alkylglucamin geeignet sowie auch Polyalkylenglykole mit Molmassen mit bis zu $M_w$ = 5.000 wie z.B. Polyethylenglykole, Ethylenoxid/Propylenoxid- bzw. Ethylenoxid/Butylenoxid- bzw. Ethylenoxid/Propylenoxid/Butylenoxid-Blockcopolymere und alkoxylierte einoder mehrwertige $C_1$- bis $C_{22}$-Alkohole, vgl. US 5,756,456.

Bevorzugt werden aus dieser Gruppe gepfropfte abgebaute bzw. abgebaute reduzierte Stärken und gepfropfte Polyethylenoxide eingesetzt, wobei 20 bis 80 Gew.-% Monomere, bezogen auf die Pfropfkomponente, bei der Pfropfpolymerisation eingesetzt werden. Zur Pfropfung wird vorzugsweise eine Mischung von Maleinsäure und Acrylsäure im Gewichtsverhältnis von 90:10 bis 10:90 eingesetzt.

Als Komponente (B) geeignete Polyglyoxylsäuren sind beispielsweise beschrieben in EP-B-0 001 004, US 5,399,286, DE-A 41 06 355 und EP-A 0 656 914. Die Endgruppen der Polyglyoxylsäuren können unterschiedliche Strukturen aufweisen.

Als Komponente (B) geeignete Polyamidocarbonsäuren und modifizierte Polyamidocarbonsäuren sind beispielsweise bekannt aus EP-A 0 454 126, EP-B 0 511 037, WO 94/01486 und EP-A 0 581 452.

Als Komponente (B) verwendet man insbesondere auch Polyasparaginsäuren oder Cokondensate der Asparaginsäure mit weiteren Aminosäuren, $C_4$-$C_{25}$-Mono- oder -Dicarbonsäuren und/oder $C_4$-$C_{25}$-Mono- oder -Diaminen. Besonders bevorzugt werden in phosphorhaltigen Säuren hergestellte, mit $C_6$-$C_{22}$-Mono- oder Dicarbonsäuren bzw. mit $C_6$-$C_{22}$-Mono- oder -Diaminen modifizierte Polyasparaginsäuren eingesetzt.

Als Komponente (B) geeignete Kondensationsprodukte der Zitronensäure mit Hydroxycarbonsäuren oder Polyhydroxyverbindungen sind z.B. bekannt aus WO 93/22362 und WO 92/16493. Solche Carboxylgruppen enthaltende Kondensate haben üblicherweise Molmassen bis zu 10.000, vorzugsweise bis zu 5.000.

Als Komponente (B) eignen sich weiterhin Ethylendiamindibernsteinsäure, Oxydibernsteinsäure, Aminopolycarboxylate, Aminopolyalkylenphosphonate und Polyglutamate.

Weiterhin können zusätzlich zur Komponente (B) oxidierte Stärken als organische Cobuilder verwendet werden.

## Tenside

Geeignete anionische Tenside (C) sind beispielsweise Fettalkoholsulfate von Fettalkoholen mit 8 bis 22, vorzugsweise 10 bis 18 Kohlenstoffatomen, z.B. $C_9$- bis $C_{11}$-Alkoholsulfate, $C_{12}$- bis $C_{14}$-Alkoholsulfate, Cetylsulfat, Myristylsulfat, Palmitylsulfat, Stearylsulfat und Talgfettalkoholsulfat.

Weitere geeignete anionische Tenside sind sulfatierte ethoxylierte $C_8$- bis $C_{22}$-Alkohole (Alkylethersulfate) bzw. deren lösliche Salze. Verbindungen dieser Art werden beispielsweise dadurch hergestellt, daß man zunächst einen $C_8$- bis $C_{22}$-, vorzugsweise einen $C_{10}$- bis $C_{18}$-Alkohol, z.B. einen Fettalkohol, alkoxyliert und das Alkoxylierungsprodukt anschließend sulfatiert. Für die Alkoxylierung verwendet man vorzugsweise Ethylenoxid, wobei man pro Mol Alkohol 2 bis 50, vorzugsweise 3 bis 20 mol Ethylenoxid einsetzt. Die Alkoxylierung der Alkohole kann jedoch auch

mit Propylenoxid allein und gegebenenfalls Butylenoxid durchgeführt werden, Geeignet sind außerdem solche alkoxylierte $C_8$- bis $C_{22}$-Alkohole, die Ethylenoxid und Propylenoxid oder Ethylenoxid und Butylenoxid oder Ethylenoxid und Propylenoxid und Butylenoxid enthalten. Die alkoxylierten $C_8$- bis $C_{22}$-Alkohole können die Ethylenoxid-, Propylenoxid- und Butylenoxideinheiten in Form von Blöcken oder in statistischer Verteilung enthalten. Je nach Art des Alkoxylierungskatalysators kann man Alkylethersulfate mit breiter oder enger Alkylenoxid-Verteilung erhalten.

Weitere geeignete anionische Tenside sind Alkansulfonate wie $C_8$- bis $C_{24}$-, vorzugsweise $C_{10}$- bis $C_{18}$-Alkansulfonate sowie Seifen wie die Na- und K-Salze von $C_8$- bis $C_{24}$-Carbonsäuren.

Weitere geeignete anionische Tenside sind $C_9$- bis $C_{20}$-linear-Alkylbenzolsulfonate (LAS) und -Alkyltoluolsulfonate.

Weiterhin eignen sich als anionische Tenside (C) noch $C_8$- bis $C_{24}$-Olefinsulfonate und -disulfonate, welche auch Gemische aus Alken- und Hydroxyalkansulfonaten bzw. -disulfonate darstellen können, Alkylestersulfonate, sulfonierte Polycarbonsäuren, Alkylglycerinsulfonate, Fettsäureglycerinestersulfonate, Alkylphenolpolyglykolethersulfate, Paraffinsulfonate mit ca. 20 bis ca. 50 C-Atomen (basierend auf aus natürlichen Quellen gewonnenem Paraffin oder Paraffingemischen), Alkylphosphate, Acylisethionate, Acyltaurate, Acylmethyltaurate, Alkylbemsteinsäuren, Alkenylbernsteinsäuren oder deren Halbester oder Halbamide, Alkylsulfobernsteinsäuren oder deren Amide, Mono- und Diester von Sulfobernsteinsäuren, Acylsarkosinate, sulfatierte Alkylpolyglucoside, Alkylpolyglykolcarboxylate sowie Hydroxyalkylsarkosinate.

Die anionischen Tenside werden dem Waschmittel vorzugsweise in Form von Salzen zugegeben. Geeignete Kationen in diesen Salzen sind Alkalimetallionen wie Natrium-, Kalium-, Lithium- und Ammoniumionen wie Hydroxyethylarnmonium-, Di(hydroxyethyl)ammonium- und Tri(hydroxyethyl)ammoniumionen.

Die Komponente (C) liegt in der erfindungsgemäßen Textilwaschmittel-Formulierung vorzugsweise in einer Menge von 3 bis 30 Gew.-%, insbesondere 5 bis 15 Gew.-% vor. Werden $C_9$- bis $C_{20}$-linear-Alkylbenzolsulfonate (LAS) mitverwendet, kommen diese üblicherweise in einer Menge bis zu 10 Gew.-%, insbesondere bis zu 8 Gew.-%, zum Einsatz. Es kann nur eine Klasse an anionischen Tensiden allein eingesetzt werden, beispielsweise nur Fettalkoholsulfate oder nur Alkylbenzolsulfonate, man kann aber auch Mischungen aus verschiedenen Klassen verwenden, z. B, eine Mischung aus Fettalkoholsulfaten und Alkylbenzolsulfonaten. Innerhalb der einzelnen Klassen an anionischen Tensiden können auch Mischungen unterschiedlicher Species zum Einsatz gelangen.

Als nichtionische Tenside (D) eignen sich beispielsweise alkoxylierte $C_8$- bis $C_{22}$-Alkohole wie Fettalkoholalkoxylate oder Oxoalkoholalkoxylate. Die Alkoxylierung kann mit Ethylenoxid, Propylenoxid und/oder Butylenoxid durchgeführt werden. Als Tenside einsetzbar sind hierbei sämtliche alkoxylierten Alkohole, die mindestens zwei Moleküle eines vorstehend genannten Alkylenoxids addiert enthalten. Auch hierbei kommen Blockpolymerisate von Ethylenoxid, Propylenoxid und/oder Butylenoxid in Betracht oder Anlagerungsprodukte, die die genannten Alkylenoxide in statistischer Verteilung enthalten. Pro Mol Alkohol verwendet man 2 bis 50, vorzugsweise 3 bis 20 mol mindestens eines Alkylenoxids. Vorzugsweise setzt man als Alkylenoxid Ethylenoxid ein. Die Alkohole haben vorzugsweise 10 bis 18 Kohlenstoffatome. Je nach Art des Alkoxylierungskatalysators kann man Alkoxylate mit breiter oder enger Alkylenoxid-Verteilung erhalten.

Eine weitere Klasse geeigneter nichtionischer Tenside sind Alkylphenolalkoxylate wie Alkylphenolethoxylate mit $C_6$ bis $C_{14}$-Alkylketten und 5 bis 30 mol Alkylenoxideinheiten.

Eine andere Klasse nichtionischer Tenside sind Alkylpolyglucoside oder Hydroxyalkylpolyglucoside mit 8 bis 22, vorzugsweise 10 bis 18 Kohlenstoffatomen in der Alkylkette. Diese Verbindungen enthalten meist 1 bis 20, vorzugsweise 1,1 bis 5 Glucosideinheiten.

Eine andere Klasse nichtionischer Tenside sind N-Alkylglucamide mit $C_6$- bis $C_{22}$-Alkylketten. Derartige Verbindungen erhält man beispielsweise durch Acylierung von reduzierend aminierten Zuckern mit entsprechenden langkettigen Carbonsäurederivaten.

Weiterhin eignen sich als nichtionische Tenside (D) noch Blockcopolymere aus Ethylenoxid, Propylenoxid und/oder Butylenoxid (Pluronic®- und Tetronic®-Marken der BASF AG), Polyhydroxy- oder Polyalkoxyfettsäurederivate wie Polyhydroxyfettsäureamide, N-Alkoxy- oder N-Aryloxy-polyhydroxyfettsäureamide, Fettsäureamidethoxylate, insbesondere endgruppenverschlossene, sowie Fettsäurealkanolamidalkoxylate.

Die Komponente (D) liegt in der erfindungsgemäßen Textilwaschmittel- Formulierung vorzugsweise in einer Menge von 1 bis 20 Gew.-%, insbesondere 3 bis 12 Gew.-% vor. Es kann nur eine Klasse an nichtionischen Tensiden allein eingesetzt werden, insbesondere nur alkoxylierte $C_8$- bis $C_{22}$-Alkohole, man kann aber auch Mischungen aus verschiedenen Klassen verwenden. Innerhalb der einzelnen Klassen an nichtionischen Tensiden können auch Mischungen unterschiedlicher Species zum Einsatz gelangen.

Da die Balance zwischen den genannten Tensidsorten von Bedeutung für die Wirksamkeit der erfindungsgemäßen Waschmittel-Formulierung ist, stehen anionische Tenside (C) und nichtionische Tenside (D) vorzugsweise im Gew.-Verhältnis von 95:5 bis 20:80, insbesondere von 70:30 bis 50:50.

Des weiteren können auch kationische Tenside (E) in den erfindungsgemäßen Waschmitteln enthalten sein.

Als kationische Tenside eignen sich beispielsweise Ammoniumgruppen enthaltende grenzflächenaktive Verbindungen wie Alkyldimethylammoniumhalogenide und Verbindungen der allgemeinen Formel

$$RR^1R^2R^3N^+ X^-$$

in denen die Reste R bis $R^3$ für Alkyl-, Aryl-, Alkylalkoxy-, Arylalkoxy-, Hydroxyalkyl(alkoxy)-, Hydroxyaryl(alkoxy)-Gruppen stehen und X ein geeignetes Anion ist.

Die erfindungsgemäßen Waschmittel können gegebenenfalls auch ampholytische Tenside (F) enthalten, wie aliphatische Derivate von sekundären oder tertiären Aminen, die in einer der Seitenketten eine anionische Gruppe enthalten, Alkyldimethylaminoxide oder Alkyl- oder Alkoxymethylaminoxide.

Komponenten (E) und (F) können bis 25%, vorzugsweise 3-15% in der Waschmittelformulierung enthalten sein.

## Bleichmittel

In einer weiteren bevorzugten Ausführungsform enthält die erfindungsgemäße Textilwaschmittel-Formulierung zusätzlich 0,5 bis 30 Gew.-% , insbesondere 5 bis 27 Gew.-%, vor allem 10 bis 23 Gew.-% Bleichmittel (G). Beispiele sind Alkaliperborate oder Alkalicarbonat-Perhydrate, insbesondere die Natriumsalze.

Ein Beispiel einer verwendbaren organischen Persäure ist Peressigsäure, die vorzugsweise bei der gewerblichen Textilwäsche oder der gewerblichen Reinigung verwendet wird.

Vorteilhaft verwendbare Bleich- oder Textilwaschmittelzusammensetzungen enthalten $C_{1-12}$-Percarbonsäuren, $C_{8-16}$-Dipercarbonsäuren, Imidopercapronsäuren, oder Aryldipercapronsäuren. Bevorzugte Beispiele verwendbarer Säuren sind Peressigsäure, lineare oder verzweigte Octan-, Nonan-, Decan- oder Dodecanmonopersäuren, Decan- und Dodecandipersäure, Mono- und Diperphthalsäuren, -isophthalsäuren und -terephthalsäuren, Phthalimidopercapronsäure und Terephthaloyldipercapronsäure. Ebenfalls können polymere Persäuren verwendet werden, beispielsweise solche, die Acrylsäuregrundbausteine enthalten, in denen eine Peroxifunktion vorliegt. Die Percarbonsäuren können als freie Säuren oder als Salze der Säuren, vorzugsweise Alkali- oder Erdalkalimetallsalze, verwendet werden. Diese Bleichmittel (G) werden gegebenenfalls in Kombination mit 0 bis 15 Gew.-%, vorzugsweise 0,1 bis 15 Gew.-%, insbesondere 0,5 bis 8 Gew.-% Bleichaktivatoren (H) verwendet. Bei Color-Waschmitteln wird das Bleichmittel (G) (wenn vorhanden) in der Regel ohne Bleichaktivator (H) eingesetzt, ansonsten sind üblicherweise Bleichaktivatoren (H) mit vorhanden.

Als Bleichaktivatoren (H) eignen sich:

- polyacylierte Zucker, z. B. Pentaacetylglucose;
- Acyloxybenzolsulfonsäuren und deren Alkali- und Erdalkalimetallsalze, z. B. Natrium-p-isononanoyloxy-benzolsulfonat oder Natrium-p-benzoyloxy-benzolsulfonat;
- N,N-diacylierte und N,N,N',N'-tetraacylierte Amine, z. B. N,N,N',N'-Tetraacetyl-mechyiendiamin und -ethylendiamin (TAED), N,N-Diacerylanilin, N,N-Diacetyl-p-toluidin oder 1,3-diacylierte Hydantoine wie 1,3-Diacetyl-3,5-dimethylhydantoin;
- N-Alkyl-N-sulfonyl-carbonamide, z. B. N-Methyl-N-mesyl-acetamid oder N-Methyl-N-mesyl-benzamid;
- N-acylierte cyclische Hydrazide, acylierte Triazole oder Urazole, z. B. Monoaceryl-maleinsäurehydrazid;
- O,N,N-trisubstituierte Hydroxylamine, z.B. O-Benzoyl-N,N-succinylhydroxylamin, O-Acetyl-N,N-succinyl-hydroxylamin oder O,N,N-Triacetylhydroxylamin;
- N,N'-Diacyl-sulfurylamide, z. B. N,N'-Dimethyl-N,N'-diacetylsulfurylamid oder N,N'-Diethyl-N,N'-dipropionyl-sulfurylamid;
- Triacylcyanurate, z.B. Triacetylcyanurat oder Tribenzoylcyanurat;
- Carbonsäureanhydride, z. B. Benzoesäureanhydrid, m-Chlorbenzoesäureanhydrid oder Phthalsäureanhyrid;
- 1,3-Diacyl-4,5-diacyloxy-imidazoline, z. B. 1,3-Diacetyl-4,5-diacetoxyimidazolin;

- Tetraacetylglycoluril und Tetrapropionylglycoluril;
- diacylierte 2,5-Diketopiperazine, z.B. 1,4-Diacetyl-2,5-diketopiperazin;
- Acylierungsprodukte von Propylendiharnstoff und 2,2-Dimethylpropylendiharnstoff, z. B. Tetraacetylpropylendiharnstoff;
- α-Acyloxy-polyacyl-malonamide, z. B. α-Acetoxy-N,N'-diacetylmalonamid;
- Diacyl-dioxohexahydro-1,3,5-triazine, z. B. 1,5-Diacetyl-2,4-dioxohexahydro-1,3,5-triazin;
- Benz-(4H)1,3-oxazin-4-one mit Alkylresten, z. B. Methyl, oder aromatischen Resten z. B. Phenyl, in der 2-Position.

Das beschriebene Bleichsystem aus Bleichmitteln und Bleichaktivatoren kann gegebenenfalls noch Bleichkatalysatoren enthalten. Geeignete Bleichkatalysatoren sind beispielsweise quatemierte Imine und Sulfonimine, die beispielsweise beschrieben sind in US 5,360,569 und EP-A 0 453 003. Besonders wirksame Bleichkatalysatoren sind Mangankomplexe, die beispielsweise in der WO 94/21777 beschrieben sind. Solche Verbindungen werden im Falle ihres Einsatzes in den Waschmitteln-Formulierungen höchstens in Mengen bis 1,5 Gew.-%, insbesondere bis 0,5 % Gew.-% eingearbeitet. Ebenfalls verwendbare Bleichkatalysatoren sind die in der gleichzeitig mit dieser Anmeldung eigereichten Anmeldung mit dem Titel "Bleichkraftverstärker für Bleichmittelund Textilwaschmittelzusammensetzungen" beschriebenen Amine.

Neben dem beschriebenen Bleichsystem aus Bleichmitteln, Bleichaktivatoren und gegebenenfalls Bleichkatalysatoren ist für die erfindungsgemäße Textilwaschmittel-Formulierung auch die Verwendung von Systemen mit enzymatischer Peroxidfreisetzung oder von photoaktivierten Bleichsystemen denkbar.

**<u>Enzyme</u>**

In einer weiteren bevorzugten Ausführungsform enthält die erfindungsgemäße Textilwaschmittel-Formulierung zusätzlich 0,05 bis 4 Gew.-% Enzyme (J). Vorzugsweise in Waschmitteln eingesetzte Enzyme sind Proteasen, Amylasen, Lipasen und Cellulasen. Von den Enzymen werden vorzugsweise Mengen von 0,1 - 1,5 Gew.-%, insbesondere vorzugsweise 0,2 bis 1,0 Gew.-%, des konfektionierten Enzyms zugesetzt. Geeignete Proteasen sind z. B. Savinase und Esperase (Hersteller: Novo Nordisk). Eine geeignete Lipase ist z.B. Lipolase (Hersteller: Novo Nordisk). Eine geeignete Cellulase ist z. B. Celluzym (Hersteller: Novo Nordisk). Auch die Verwendung von Peroxidasen zur Aktivierung des Bleichsystems ist möglich. Man kann einzelne Enzyme oder eine Kombination unterschiedlicher Enzyme einsetzen. Gegebenenfalls kann die erfindungsgemäße Textilwaschmittel-Fortnulierung noch Enzymstabilisatoren, z. B. Calciumpropionat, Natriumformiat oder Borsäuren oder deren Salze, und/oder Oxidationsverhinderer enthalten.

**<u>Weitere Inhaltsstoffe</u>**

Die erfindungsgemäße Textilwaschmittel-Formulierung kann neben den genannten Hauptkomponenten (A) bis (J) noch folgende weitere übliche Zusätze in den hierfür üblichen Mengen enthalten:

- Vergrauungsinhibitoren und weitere Soil Release-Polymere

  Geeignete weitere Soil Release-Polymere und/oder Vergrauungsinhibitoren für Waschmittel sind beispielsweise:

  Polyester aus Polyethylenoxiden mit Ethylenglykol und/oder Propylenglykol und aromatischen Dicarbonsäuren oder aromatischen und aliphatischen Dicarbonsäuren;

  Polyester aus einseitig endgruppenverschlossenen Polyethylenoxiden mit zwei-und/oder mehrwertigen Alkoholen und Dicarbonsäure.

  Derartige Polyester sind bekannt, beispielsweise aus US 3,557,039, GB-A 1 154 730, EP-A-0 185 427, EP-A-0 241 984, EP-A-0 241 985, EP-A-0 272 033 und US 5,142,020.

  Weitere geeignete Soil Release-Polymere sind amphiphile Pfropf- oder Copolymere von Vinyl-und/oder Acrylestern auf Polyalkylenoxide (vgl. US 4,746,456, US 4,846,995, DE-A-37 11 299, US 4,904,408, US 4,846,994 und US 4,849,126) oder modifizierte Cellulosen wie Methylcellulose, Hydroxypropylcellulose oder Carboxymethylcellulose.

- Farbübertragungsinhibitoren, beispielsweise Homo- und Copolymerisate des Vinylpyrrolidons, des Vinylimidazols, des Vinyloxazolidons oder des 4-Vinylpyridin-N-oxids mit Molmassen von 15.000 bis 100.000 sowie vernetzte feinteilige Polymere auf Basis dieser Monomere;
- nichttensidartige Schaumdämpfer oder Schauminhibitoren, beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure;
- Komplexbildner (auch in der Funktion von organischen Cobuildern);
- optische Aufheller;
- Polyethylenglykole;
- Parfüme oder Duftstoffe;
- Füllstoffe;
- anorganische Stellmittel, z. B. Natriumsulfat;
- Konfektionierhilfsmittel;
- Löslichkeitsverbesserer;
- Trübungs- und Perlglanzmittel;
- Farbstoffe;
- Korrosionsinhibitoren;
- Peroxidstabilisatoren;
- Elektrolyte.

Die erfindungsgemäße Waschmittelformulierung ist fest, d.h. liegt üblicherweise pulver- oder granulatförmig oder in Extrudat- oder Tablettenform vor.

Die erfindungsgemäßen pulver- oder granulatförmigen Waschmittel können bis zu 60 Gew.-% anorganischer Stellmittel enthalten. Üblicherweise wird hierfür Natriumsulfat verwendet. Vorzugsweise sind die erfindungsgemäßen Waschmittel aber arm an Stellmitteln und enthalten nur bis zu 20 Gew.-%, besonders bevorzugt nur bis zu 8 Gew.-% an Stellmitteln, insbesondere bei Kompakt- oder Ultrakompaktwaschmitteln. Die erfindungsgemäßen festen Waschmittel können unterschiedliche Schüttdichten im Bereich von 300 bis 1.300 g/l, insbesondere von 550 bis 1.200 g/l besitzen. Moderne Kompaktwaschmittel besitzen in der Regel hohe Schüttdichten und zeigen einen Granulataufbau. Zur erwünschten Verdichtung der Waschmittel können die in der Technik üblichen Verfahren eingesetzt werden.

Die erfindungsgemäße Waschmittelformulierung wird nach üblichen Methoden hergestellt und gegebenenfalls konfektioniert.

Im folgenden werden typische Zusammensetzungen für Kompakt-Vollwaschmittel und Color-Waschmittel angegeben (die Prozentangaben beziehen sich im folgenden sowie in den Beispielen auf das Gewicht; die Angaben in Klammern bei den Zusammensetzungen sind Vorzugsbereiche):

| *Zusammensetzung Kompakt-Vollwaschmittel (pulver- oder granulatförmig)* | |
|---|---|
| 1-60% (8-30%)<br>5-50% (10-45%) | mindestens eines anionischen (C) und eines nichtionischen Tensids (D)<br>mindestens eines anorganischen Builders (A) |

(fortgesetzt)

| *Zusammensetzung Kompakt-Vollwaschmittel (pulver- oder granulatförmig)* | |
|---|---|
| 0,1-20% (0,5-15%) | mindestens eines organischen Cobuilders (B) |
| 5-30% (10-25%) | eines anorganischen Bleichmittels (G) |
| 0,1-15% (1-8%) | eines Bleichaktivators (G) |
| 0-1% (höchst.0,5%) | eines Bleichkatalysators |
| 0,05-5% (0,2-2,5%) | eines Farbübertragungsinhibitors |
| 0,3-1,5% | erfindungsgemäßes Soil Release-Mittel |
| 0,1-4% (0,2-2%) | Enzym oder Enzymmischung (H) |

Die Gesamtmenge der Inhaltsstoffe ergibt 100 Gew.-%.

Weitere übliche Zusätze:

Natriumsulfat, Komplexbildner, Phosphonate, optische Aufheller, Parfümöle, Schaumdämpfer, Vergrauungsinhibitoren, Bleichstabilisatoren

| *Zusammensetzung Color-Waschmittel (pulver- oder granulatförmig)* | |
|---|---|
| 3 - 50% (8 - 30%) | mindestens eines anionischen (C) und eines nichtionischen Tensids (D) |
| 10 - 60% (20 - 55%) | mindestens eines anorganischen Builders (A) |
| 0 - 15 % (0 - 5%) | eines anorganischen Bleichmittels (G) |
| 0,05-5% (0,2-2,5%) | eines Farbübertragungsinhibitors |
| 0,1-20% (1-8%) | mindestens eines organischen Cobuilders (B) |
| 0,2-2% | Enzym oder Enzymmischung (J) |
| 0,2-1,5% | erfindungsgemäßes Soil Release-Mittel |

Die Gesamtmenge der Inhaltsstoffe ergibt 100 Gew.-%.

Weitere übliche Zusätze:

Natriumsulfat, Komplexbildner, Phosphonate, optische Aufheller, Parfümöle, Schaumdämpfer, Vergrauungsinhibitoren, Bleichstabilisatoren.

Die erfindungsgemäßen vernetzten stickstoffhaltigen Verbindungen (Soil Release-Mittel) sind in Waschmitteln erfindungsgemäß in Mengen von 0,05 bis 5 Gew.-%, vorzugsweise 0,1 bis 4 Gew.-%, insbesondere 0,2 bis 2 Gew.-%. enthalten.

Die Erfindung wird anhand der nachstehenden Beispiele näher erläutert.

**Beispiele**

**Allgemeine Vorschrift 1:**

**Vernetzung von Polyethylenimin bzw. Polyethylenimin-Derivaten mit dem Bisglycidylether eines Polyethylenglykols der Molmasse 1.500**

Eine 25% ige wäßrige Lösung des Polyethylenimins/-Derivats wird bei 70°C protionsweise mit einer 20 bis 22 % igen wäßrigen Lösung eines Polyethylenglykolbisglycidylethers der mittleren Molmasse 1.600 (bzw. dessen Bis-Chlorhydrin) versetzt, bis die Reaktionslösung eine Viskosität von etwa 500 bis 1.000 mPas aufweist. Der pH-Wert der Lösung wird mittels 85%iger Ameisensäure auf 7,5 bis 8,0 eingestellt.

Diese allgemeine Vorschrift kann beispielsweise auf Polyethylenimine und deren Amidierungsprodukte angewendet werden.

Beispiel A

**Polyethylenimin aus 10 mol Ethylenimin, vernetzt mit Bisglycidylether eines Polyethylenglykols der Molmasse 1.500**

6,0 g (0,10 mol) Ethylendiamin, 2,2 g (0,05 mol) $CO_2$ und 17 g VE-Wasser werden als Katalysatorlösung vorgelegt und bei 90°C tropfenweise mit einer 60%igen Ethyleniminlösung aus 43 g (1 mol) Ethylenimin und 29 g Eis versetzt. Der Ansatz wird bei 90°C nachgerührt, bis der Test auf alkylierende Substanzen nach Preußmann* negativ ist. Das so erhaltene Produkt wird nach der allgemeinen Vorschrift 1 mit dem Bisglycidylether vernetzt.

Beispiel B

**Polyethylenimin aus 20 mol Ethylenimin, vernetzt mit Bisglycidylether eines Polyethylenglykols der Molmasse 1.500**

3,0 (0,05 mol) Ethylendiamin, 1,1 g (0,025 mol) $CO_2$ und 17 g VE-Wasser werden als Katalysatorlösung vorgelegt und tropfenweise bei 90°C mit einer 60%igen Ethyleniminlösung aus 43 g (1 mol) Ethylenimin und 29 g Eis versetzt. Der Ansatz wird bei 90°C nachgerührt, bis der Test auf alkylierende Substanzen nach Preußmann* negativ ist. Das so erhaltene Produkt wird nach der allgemeinen Vorschrift 1 mit dem Bisglycidylether vernetzt.

Beispiel C

**Amidierung von Polyethylenimin mit Benzoesäure 20:1, vernetzt mit Bisglycidylether eines Polyethylenglykols der Molmasse 1.500**

1290 g Polyethylenimin wasserfrei (= 30 Äq. N), hergestellt gemäß Beispiel A, werden unter Stickstoff vorgelegt. Bei 140°C werden 183,18 g Benzoesäure (1,5 mol) portionsweise eingetragen. Der Ansatz wird bei 180°C nachgerührt, bis die Säurezahl unter 5% des Einsatzwertes liegt. Das so erhaltene Produkt wird nach der allgemeinen Vorschrift 1 mit dem Bisglycidylether vernetzt.

Beispiel D

**Amidierung von Polyethylenimin mit Benzoesäure 10:1, vernetzt mit Bisglycidylether eines Polyethylenglykols der Molmasse 1.500**

645 g Polyethylenimin wasserfrei (=15 Äq. N), hergestellt gemäß Beispiel B, werden unter Stickstoff vorgelegt. Bei 140°C werden 183,2 g Benzoesäure (1,5 mol) portionsweise eingetragen. Man erhöht die Reaktionstemperatur auf 180°C und destilliert das gebildete Reaktionswasser mit einem schwachen Stickstoffstrom ab, bis die Säurezahl unter 5% des Einsatzwertes liegt. Das so erhaltene Produkt wird nach der allgemeinen Vorschrift 1 mit dem Bisglycidylether vernetzt.

Allgemeine Vorschrift 2

**Vernetzung von Tetraaminopropylethylendiamin und Derivaten mit Bisglycidylether eines Polyethylenglykols der Molmasse 1.500**

Eine 25%ige wäßrige Lösung des Tetraaminopropylethylendiamins wird bei 70°C portionsweise mit einer etwa 20%igen wäßrigen Lösung eines Polyethylenglykolbisglycidylethers der Molmasse 1.600 (bzw. dessen Bis-Chlorhydrin) versetzt, bis die Reaktionslösung eine Viskosität von etwa 500 bis 1.000 mPas aufweist. Falls der pH-Wert unter pH = 9 absinkt, gibt man portionsweise NaOH (50%ig) hinzu, bis der pH-Wert von 10,5 erreicht wird.

Diese Vorschrift kann für Tetraaminopropylethylendiamin, dessen höhere Homologe wie auch für deren Amidierungsprodukte mit verschiedenen Amidierungsgraden verwendet werden.

Beispiel E

**N,N,N',N'-Tetraaminopropyl-1,2-ethylendiamin (N6-Amin), vernetzt mit Bisglycidylether eines Polyethylenglykols der Molmasse 1.500**

Darstellung von N,N,N',N'-Tetracyanoethyl-1,2-ethylendiamin:
Zu einer Lösung von 100 g (1,67 mol) 1,2-Ethylendiamin in 1176 ml Wasser werden innerhalb von 90 Minuten 443 g (8,35 mol) Acrylnitril zugegeben. Dabei darf die Temperatur 40°C nicht übersteigen. Der Kolben wird nach beendigter Zugabe des Acrylnitrils noch eine Stunde bei 40°C und zwei weiteren Stunden bei 80°C nachgerührt. Anschließend wird überschüssiges Acrylnitril abdestilliert und danach durch Anlegen eines Wasserstrahl- bzw. eines Ölpumpenvakuums das Wasser weitgehend abdestilliert. Das tetracyanoethylierte Ethylendiamin wird aus Methanol umkristallisiert und abgesaugt. Die Ausbeute beträgt 478 g (1,58 mol).

Darstellung von N,N,N',N'-Tetraaminopropyl-1,2-ethylendiamin (N6-Amin): Man leitet 400 ml/h eines Gemisches aus 20 Gew.-% N,N,N',N'-Tetracyanoethyl-1,2-ethylendiamin und 80 Gew.-% N-Methylpyrrolidon und 3.500 ml/h Ammoniak bei 130°C und 200 bar Wasserstoffdruck in einem 5 1-Festbettreaktor über 4 1 eines Festbettkatalysators der Zusammensetzung 90 Gew.-% CoO, 5 Gew.-% MnO, 5 Gew.-% $P_2O_5$. Nach Entfernung des N-Methylpyrrolidons im Vakuum und fraktionierter Destillation (Siedepunkt: 218°C bei 6 mbar) erhält man N,N,N',N'-Tetraaminopropyl-1,2-ethylendiamin (N6-Amin) in 95%iger Ausbeute. Das Produkt wurde mittels $^{13}C$- und $^{1}H$-NMR- sowie Massenspektroskopie auf Einheitlichkeit und Vollständigkeit der Reaktion überprüft.

Das so erhaltene Produkt wird nach der allgemeinen Vorschrift 2 mit dem Bisglycidylether vernetzt.

(* Preußmann Test = Test auf alkylierende Verbindungen, Durchführung gemäß J. Epstein et al., Analyt. Chem. 27 (1955) 1435 bzw. R. Preußmann et al., Arzneimittelforsch. 19 (1969) 1059.)

Waschversuche

Die Soil Release-Wirkung der erfindungsgemäßen Verbindungen wurde in Waschversuchen im Launder-O-meter unter standardisierten Bedingungen bestimmt. Zur Prüfung wurde die Waschmittel-Formulierung (Zusammensetzung I in Tabelle 4) verwendet. Die Verwendung der Waschmittel-Formulierungen II bis XI ist ebenfalls erfindungsgemäß möglich.

Die Waschmittel-Formulierung I wurde zunächst ohne erfindungsgemäße Verbindung untersucht und anschließend mit den erfindungsgemäßen Verbindungen aus Beispielen A bis E in Konzentrationen von 2 Gew.-%, bezogen auf die Gesamtmenge an Waschmittel. Mit der so additivierten Waschmittel-Formulierung I wurden die Prüfgewebe dreimal vorgewaschen (Vorwäsche; Waschbedingungen nachstehend), getrocknet und mit 0,2 g gebrauchtem Motoröl angeschmutzt. Die Ölflecken wurden 14 Stunden altern gelassen. Anschließend wurden die Prüfgewebe nochmals mit der additivierten Waschmittel-Formulierung I gewaschen (Hauptwäsche) und die Schmutzablösung bestimmt.

**Waschbedingungen**

| | |
|---|---|
| Gerät | Launder-O-meter der Fa. Atlas, Chicago |
| Waschflotte | 250 ml |
| Waschdauer | 30 min bei 60°C |
| Waschmitteldosierung | 6 g/l |
| Wasserhärte | 3 mmol; Ca: Mg 4 : 1 |
| Flottenverhältnis | 1 : 12,5 |
| Prüfgewebe | BW221, PES850, Mischgewebe PES/BW 65:35 |

**Waschergebnis**

Zur Bewertung des Waschergebnisses wurden die Remissionswerte des Prüfgewebes vor der Wäsche ($R_0$), des angeschmutzten Prüfgewebes vor der Hauptwäsche (R vor) und nach der Hauptwäsche (R nach) bestimmt. Sodann wurde der Prozentwert für den Soil Release bestimmt nach

$$\% \text{ Soil Release} = (\text{R nach} - \text{R vor})/(R_0 - \text{R vor}) \times 100$$

Je höher der Prozentwert % Soil Release ist, desto besser wurde der Fleck entfernt. Eine vollständige Fleckentfernung entspricht 100%. Entscheidend ist dabei der Unterschied in % Soil Release zwischen der Waschmittel-Formulierung ohne und mit erfindungsgemäßer Verbindung. Je höher die Differenz zwischen % Soil Release ohne und mit erfindungsgemäßer Verbindung ausfällt, desto stärker verbessert der Zusatz der erfindungsgemäßen Verbindung das Waschergebnis der Waschmittel-Formulierung. Die Ergebnisse der Waschversuche sind in Tabellen 1 und 2 angegeben.

Tabelle 1

| **Verbesserung der Schmutzablösung durch 2% Zusatz der erfindungsgemäßen Verbindungen** | | | | |
|---|---|---|---|---|
| *Gewebe: Polyester PES 850* | | | | |
| **Beispiel** | **R vor** | **R nach** | **Differenz** | **% Soil Release** |
| ohne | 23,6 | 50,5 | 26,9 | 45,3 |
| A | 24,1 | 64,4 | 40,3 | 68,5 |
| B | 25,4 | 65,8 | 40,4 | 70,3 |
| C | 24,7 | 96,2 | 44,5 | 76,4 |
| D | 24,6 | 67,7 | 43,1 | 73,8 |
| E | 25,1 | 64,5 | 39,4 | 68,2 |

Tabelle 2

| **Unterscheidung zwischen Primärwasch- und Soil Release-Effekt** | | | | | |
|---|---|---|---|---|---|
| *Gewebe: Polyester PES 850* | | | | | |
| **Beispiel** | **Modus** | **R vor** | **R nach** | **% Soil Release** | **% SR mit - % SR ohne*** |
| A | mit/ohne | 22,4 | 55 | 53,8 | 13,2 |
| | ohne/mit | 23,8 | 44,5 | 34.9 | -5,7 |
| D | mit/ohne | 23,7 | 63,7 | 67,4 | 26,8 |
| | ohne/mit | 23,8 | 46,4 | 38,2 | -2.4 |
| E | mit/ohne | 23,9 | 60,2 | 61,4 | 20,8 |
| | ohne/mit | 23,8 | 47,2 | 39,5 | -1,1 |

*: % SR ohne = 40,6

Aus den Tabellen 1 und 2 ist ersichtlich, daß die erfindungsgemäßen Verbindungen der Beispiele A bis E die Schmutzablösung bei der Wäsche deutlich verbessern. Der Weißgrad des Gewebes nach der Wäsche, R nach, wird signifikant verbessert durch Zusatz der erfindungsgemäßen Verbindungen.

In Tabelle 2 sind Ergebnisse angegeben, aus denen hervorgeht, daß es sich bei der verbesserten Schmutzablösung um einen Soil Release-Effekt handelt und nicht um einen reinen Primärwasch-Effekt. In der dieser Tabelle zugrundeliegenden Versuchsserie wurden zwei verschiedene Applikationsvarianten durchgeführt:

| | |
|---|---|
| Modus 1 | dreimalige Vorwäsche mit additiviertem Waschmittel, Hauptwäsche (nach dem Anschmutzen) ohne Additiv im Waschmittel (= mit/ohne) |
| Modus 2 | dreimalige Vorwäsche ohne Additiv im Waschmittel, Hauptwäsche (nach dem Anschmutzen) mit additiviertem Waschmittel (= ohne/mit) |

Wird nach Modus 1 eine Verbesserung der Schmutzablösung im Vergleich zum Versuch mit Vorwäsche und Hauptwäsche mit Waschmittel, aber ohne Additiv (% SR ohne) erzielt, so handelt es sich um einen Soil Release-Effekt. Wird nach Modus 2 eine verbesserte Schmutzablösung erzielt, so handelt es sich um einen Primärwasch-Effekt. Aus den Ergebnissen aus Tabelle 2 geht hervor, daß nur nach Modus 1 eine verbesserte Schmutzablösung erreicht werden kann, so daß der durch die erfindungsgemäßen Produkte erzielte Effekt auf einer Soil Release-Wirkung beruht.

Ferner wurden die vernetzten Polyamine in Kombination mit den entsprechenden, jedoch nicht vernetzten Polyaminen eingesetzt. Die Ergebnisse sind in Tabelle 3 dargestellt.

Tabelle 3

| Verbesserung der Schmutzablösung durch Zusatz von Kombinationen unvernetzter und vernetzter Polyamine | | | | | | | | | |
|---|---|---|---|---|---|---|---|---|---|
| *jeweils 2 + 2 % Prüfsubstanz* | | | | | | | | | |
| **Beispiel** | **Baumwolle** | | | **Mischgewebe** | | | **Polyester** | | |
| | R vor | R nach | % SR | R vor | R nach | % SR | R vor | R nach | % SR |
| ohne | 22.7 | 63 | 69,4 | 25,4 | 60,1 | 60,3 | 19,2 | 41,9 | 35,9 |
| A + A' | 21,6 | 65,9 | 74,4 | 21,9 | 64,5 | 96,8 | 16,4 | 55,2 | 58,9 |
| C + C' | 21,8 | 67,8 | 77,9 | 24,8 | 70,9 | 79,3 | 18,3 | 62 | 68,4 |
| E + E' | 21,7 | 68,3 | 78,7 | 24,3 | 70,8 | 79,3 | 19,3 | 56,3 | 59,2 |
| C + OA | 21,9 | 77,3 | 94 | 21,7 | 71,2 | 80,8 | 19,4 | 74 | 86,9 |
| A' = Beispiel A, unvernetzt<br>C' = Beispiel C, unvernetzt<br>E' = Beispiel E, unvernetzt<br>OA = Octylamin | | | | | | | | | |

Aus den Ergebnissen aus Tabelle 3 geht hervor, daß die Gemische aus vernetzten und unvernetzten Polyaminen vorteilhaft zur Wäsche aller gängigen Textilien, wie Baumwolle, Polyester und Mischgeweben aus Baumwolle und Polyester, eingesetzt werden können.

**Tabelle 4**

**Zusammensetzung der Waschmittel-Formulierungen**

| Bestandteile | Zusammensetzung in % | | | | | | | | | | | |
|---|---|---|---|---|---|---|---|---|---|---|---|---|
| | I | II | III | IV | V | VI | VII | VIII | IX | X | XI | XII |
| | | | | | | | | | | | | |
| lineares $C_{12}$-Alkylbenzolsulfonat (Na-Salz) | 9 | | 11 | 11 | 11 | | | | | | | |
| $C_{12}$-$C_{18}$-Alkylsulfat | 1,5 | 9 | 1 | 1 | | 8 | 8 | 10 | 10 | 10 | | 8 |
| $C_{12}$-Fettalkohol x 2EO-sulfat | | | | | | | | | | | | 2 |
| Oleoylsarkosin-Na-Salz | | | | | | | | | | | 9 | |
| | | | | | | | | | | | | |
| $C_{12}$-$C_{18}$-Fettalkohol x 4EO | | | | | | | | | | | | 3 |
| $C_{12}$-$C_{18}$-Fettalkohol x 7EO | | 7 | | | | 7 | 7 | | | | | |
| $C_{13}$-$C_{15}$-Oxoalkohol x 7EO | 7 | | 6 | 6 | 6 | | | | | | 8 | |
| | | | | | | | | | | | | |
| $C_{16}$-$C_{18}$-Glucamid | | | | | | | | | | | | 4 |
| $C_{12}$-$C_{14}$-Alkylpolyglucosid | | | | | | | | 9 | 9 | | | |
| $C_8$-$C_8$-Fettsäuremethyltetraglykolamid | | | | | | | | | | 9 | | |
| Seife | 2 | 2 | 2 | 2 | 2 | 1 | 1 | 1 | 1 | 1 | 1 | 2 |
| | | | | | | | | | | | | |
| Na-Metasilikat x $5,5H_2O$ | | | | | | | | 3 | 3 | 3 | 3 | |

| Bestandteile | Zusammensetzung in % | | | | | | | | | | | |
|---|---|---|---|---|---|---|---|---|---|---|---|---|
| | I | II | III | IV | V | VI | VII | VIII | IX | X | XI | XII |
| Mg-Silikat | 1 | 1 | | | | | | | | | | |
| Na-Silikat | | | 2 | 2 | 2 | 3 | 3 | | | | | |
| | | | | | | | | | | | | |
| Zeolith A | 45 | 45 | 40 | 40 | 40 | 36 | 20 | 30 | 30 | 30 | 30 | 20 |
| Zeolith P | | | | | | | 10 | | | | | |
| Schichtsilikat SKS6 | | | | | | | | | | | | 15 |
| | | | | | | | | | | | | |
| Natriumcarbonat | 7 | 7 | 6 | 6 | 6 | 12 | 10 | 8 | 8 | 8 | 8 | |
| | | | | | | | | | | | | |
| Natriumcitrat | 12 | 12 | | | | 5 | | | | | | 5 |
| Natriumcitrat x $2H_2O$ | | | 18 | 18 | 18 | | | | | | | |
| | | | | | | | | | | | | |
| MGDA-Tri-Na | | | | | | | 5 | 5 | 5 | | | |
| | | | | | | | | | | | | |
| Phosphonat | | | | 1 | | | | | | 1 | 2 | |
| | | | | | | | | | | | | |
| TAED | | | | | | 4 | 4 | 4 | 4 | 4 | 4 | 5 |
| Natrium-perborat x $4H_2O$ | | | | | | | | | 20 | | | |
| Natrium-perborat x $1H_2O$ | | | | | | | | 14,4 | | 14,4 | 14,4 | |
| Natrium-percarbonat | | | | | | 15 | 15 | | | | | 15 |

| Bestandteile | Zusammensetzung in % | | | | | | | | | | | |
|---|---|---|---|---|---|---|---|---|---|---|---|---|
| | I | II | III | IV | V | VI | VII | VIII | IX | X | XI | XII |
| Carboxymethylcellulose | 1 | 1 | 1 | 1 | 1 | 1,5 | 1 | 1,2 | 1,2 | 1,2 | 1,2 | 1 |
| Lipase | 0,2 | 0,2 | | | 0,2 | 0,2 | 0,2 | 0,2 | 0,2 | 0,2 | 0,2 | 0,2 |
| Protease | 0,3 | 0,3 | | | 0,3 | 0,3 | 0,3 | 0,3 | 0,3 | 0,3 | 0,3 | 0,3 |
| Cellulase | 0,5 | 0,5 | | | 0,5 | 0,5 | 0,5 | 0,5 | 0,5 | 0,5 | 0,5 | 0,5 |
| Natriumsulfat | 3 | 3 | 3 | 3 | 3 | 2 | 3 | 3 | 3 | 3 | 3 | 3 |
| Polymer (AS/MS-Copolymer) | 5 | 5 | 5 | 5 | 5 | 3 | 5 | 5 | 5 | 5 | 5 | 5 |
| Soil Release-Polymer | 2 | 1 | | 1 | 1 | 0,5 | 0,5 | 0,5 | 0,5 | 0,5 | 0,5 | 0,5 |
| Farbübertragungsinhibitor | 1,5 | | 1 | 1 | 1 | 0,5 | | | | | | |
| Wasser | ad 100 | ad 100 | ad 100 | ad 100 | ad 100 | ad 100 | ad 100 | ad 100 | ad 100 | ad 100 | ad 100 | ad 100 |

## Enzymstabilisierende Wirkung

Zur Prüfung der enzymstabilisierenden Wirkung der erftndungsgemäßen Verbindungen wurden sie in eine flüssige Waschmittelformulierung eingearbeitet und dieser eine Protease zugegeben. Nach 25 und 50 Tagen wurden Waschversuche mit Testschmutzgewebe durchgeführt. Als Vergleich dienten Waschmitteiformulierungen ohne Enrymzusatz und mit Enzymzusatz, aber ohne Zusatz der erfindungsgemäßen Verbindungen.

Die Auswertung der Waschversuche erfolgte durch Messung der Farbstärke der Prüfgewebe und Ermittlung der Primärwasch-Wirkung $A_{abs}$ aus der Farbstärke nach dem in A.Kud, Seifen, Öle, Fette, Wachse, 119, S. 590-594 beschriebenen Verfahren.

## Prüfbedingungen

*Lagerung:*

| | |
|---|---|
| Lagertemperatur der flüssigen Waschmittelformulierung | 30°C |
| Enzym | Protease, Savinase® 16L (Hersteller Novo Nordisk) |
| Menge Enzym | 0,4% Savinase 16L |
| Lagerdauer | 50 Tage |

*Waschbedingungen:*

| | |
|---|---|
| Apparatur | Launder-O-meter |
| Schmutzgewebe | 2,5 g CFT AS 10 (Pigment/Öl/Milch) |
| Ballastgewebe | 5,0 g Baumwolle |
| Waschmittel | nachstehende Formulierung XII |
| Menge | 4,0 g/l |
| Flottenmenge | 250 g |
| Waschtemperatur | 20°C |
| Wasserhärte | 3 mmol/l |
| Ca/Mg-Verhältnis | 4,0 : 1,0 |
| Waschdauer | 15 min |

*Waschmittetformutierung XII:*

| | |
|---|---|
| lineares Alkylbenzolsulfonat | 19,5 |
| Kokosfettsäure | 8,3 |
| $C_{13}/_{15}$-Oxoalkoholethoxylat | 16,8 |
| Ethanol | 0,7 |
| 1,2-Propandiol | 11,0 |
| Ethanolamin | 9,4 |
| Zitronensäure | 4,8 |
| Sokalan® CP5 | 0,9 |
| Dequest® 2006 | 1,0 |
| Savinase® 16L | 0,4 (bzw. 0 im Vergleichsversuch ohne Enzym) |
| erfindungsgemäßes Polymer | 2,5 (bzw. 0 im Vergleichsversuch ohne Polymer) |

Die Ergebnisse sind in der nachstehenden Tabelle 5 aufgeführt.

Tabelle 5

| Prüfergebnisse zur Enzymstabilisierung | | | | | |
|---|---|---|---|---|---|
| **Versuch** | **Lagerdauer [Tage]** | **Enzymmenge [%]** | **Polymer** | **Polymermenge [%]** | **Primarwasch- wirkung $A_{abs}$ [%]** |
| 1 | 25 | - | - | - | 38 |
| 2 | 25 | 0,4 | - | - | 55 |
| 3 | 25 | - | C | 2,5 | 37 |
| 4 | 25 | 0,4 | C | 2,5 | 66 |
| 5 | 50 | - | - | - | 41 |
| 6 | 50 | 0,4 | - | - | 46 |
| 7 | 50 | 0,4 | C | 2.5 | 68 |

Als Polymer wurde das Polymer aus Beispiel C verwendet. Die Ergebnisse der Tabelle 5 zeigen, daß mit den erfindungsgemäßen vernetzten Verbindungen eine deutlich verbesserte Enzymaktivität bei längerer Lagerung im Vergleich zu den Versuchen ohne Polymerzusatz erreicht wird. Nach 50 Tagen Lagerung bei 30°C ist im Flüssigwaschmittel ohne erfindungsgemäße Verbindung die Proteasewirkung nahezu vollständig verloren, während in den Formulierungen mit Verbindung C nach 50 Tagen noch hohe Protease-Aktivität beobachtet wird.

## Patentansprüche

**1.** Wasserlösliches Vernetzungsprodukt, erhältlich durch Vernetzung von Aminen der allgemeinen Formel (II)

$$(R^1R^1)N\text{-}X\text{-}N(R^1R^1) \qquad \text{(II)}$$

wobei
die Reste $R^1$ Reste $(R^2R^2)N\text{-}(CH_2)_n\text{-}$,
die Reste $R^2$ Wasserstoffatome sind oder Reste $(R^3R^3)N\text{-}(CH_2)_n\text{-}$,
die Reste $R^3$ Wasserstoffatome sind oder Reste $(R^4R^4)N\text{-}(CH_2)_n\text{-}$,
die Reste $R^4$ Wasserstoffatome sind oder Reste $(R^5R^5)N\text{-}(CH_2)_n\text{-}$,
die Reste $R^5$ Wasserstoffatome sind oder Reste $(R^6R^6)N\text{-}(CH_2)_n\text{-}$,
die Reste $R^6$ Wasserstoffatome sind,
n einen Wert von 2, 3 oder 4 hat und
der Rest X einer der Reste

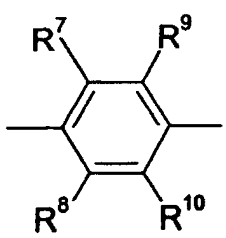 , 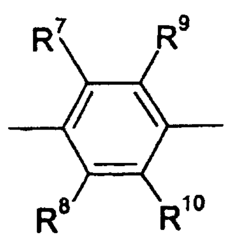 Y 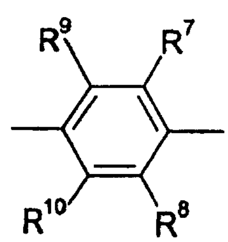

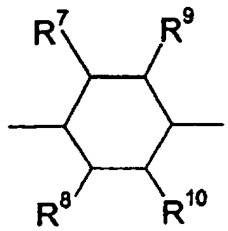 , 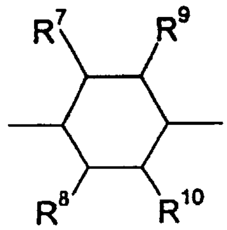 Y 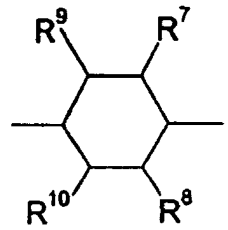

- $(CH_2)_p$-, $-(CH_2)_3$-$NR^{11}$-$(CH_2)_3$-, $-(CH_2)_l$-$[O-(CH_2)_k]_m$-$O-(CH_2)_l$- $C_{2-20}$-Alkylen, der Rest Y ein Sauerstoffatom, ein Rest $CR^7R^9C=O$ oder $SO_2$ ist, p einen ganzzahligen Wert von 2 - 20 hat, 1 und k unabhängig voneinander einen ganzzahligen Wert von 2 bis 6 haben m einen ganzzahligen Wert von 1 bis 40 hat, die Reste $R^7$, $R^8$, $R^9$ und $R^{10}$ unabhängig voneinander Wasserstoffatome sind oder $C_{1-6}$-Alkylreste, und der Rest $R^{11}$ ein $C_{1-20}$-Alkylrest, $C_{2-20}$-Dialkylamino-$C_{2-10}$-alkylrest, $C_{1-10}$-Alkoxy-$C_{2-10-}$ alkylrest, $C_{2-20}$-Hydroxyalkylrest, $C_{3-12}$-Cycloalkylrest, $C_{4-20}$-Cycloalkyl-alkylrest, $C_{2-20}$-Alkylenrest, $C_{4-30}$-Dialkylaminoalkenylrest, $C_{3-30}$-Alkoxy-alkylenrest, $C_{3-20}$-Hydroxyalkenylrest, $C_{5-20}$-Cycloalkyl-alkenylrest, ein gegebenenfalls durch $C_{1-8}$-Alkylrest, $C_{2-8}$-Dialkyl-aminorest, $C_{1-8}$-Alkoxyrest, Hydroxylrest, $C_{3-8}$-Cycloalkylrest, $C_{4-12}$-Cycloalkyl-alkylrest, ein- bis fünffach substituierter Arylrest oder $C_{7-20}$-Aralkylrest ist oder zwei Reste $R^{11}$ gemeinsam eine gegebenenfalls durch Stickstoff oder Sauerstoff unterbrochene Alkylenkette ergeben, wie aus Ethylenoxid, Propylenoxid, Butylenoxid und $-CH_2$-$CH(CH_3)$-O- oder Polyisobutylen mit 1 bis 100 iso-Butyleneinheiten, mit mindestens einem Bisglycidylether eines Polyethylenglykols mit einem Gewichtsmittel des Molekulargewichts von 300 bis 3000 als Vernetzer (b).

**2.** Wasserlösliches Vernetzungsprodukt nach Anspruch 1, in dem das Amin der allgemeinen Formel (II) N, N, N', N'-Tetraaminopropyl-1,2-ethylendiamin ist.

**3.** Verwendung von wasserlöslichen oder in Wasser dispergierbaren, vemetzten stickstoffhaltigen Verbindungen, erhältlich durch Vernetzung von

(a) mindestens drei NH-Gruppen enthaltenden Verbindungen, ausgewählt aus Aminen der allgemeinen Formel (II) gemäß Anspruch 1 oder Polyethylenimin mit einem Polymerisationsgrad von 5 bis 100, mit

(b) Bisglycidylethern eines Polyethylenglykols mit einem Gewichtsmittel des Molekulargewichts von 300 bis 3000 als Vernetzern, die mit NH-Gruppen reagieren,

in Wasch- und Reinigungsmitteln als Soil-Release-Mittel und/oder Enzymstabilisatoren.

**4.** Verwendung nach Anspruch 3, **dadurch gekennzeichnet, dass** die Verbindung (a) N, N, N', N'-Tetraaminopropyl-1,2-ethylendiamin ist.

**5.** Wasch- und Reinigungsmittel, enthaltend mindestens eine vemetzte stickstoffhaltige Verbindung, wie sie in einem der Ansprüche 3 oder 4 definiert ist, und mindestens ein Tensid.

**6.** Wasch- und Reinigungsmittel nach Anspruch 5, zusätzlich mindestens ein Enzym enthaltend.

## Claims

**1.** A water-soluble crosslinked product obtainable by crosslinking amines of the formula (II)

$$(R^1R^1)N\text{-}X\text{-}N(R^1R^1) \qquad (II)$$

where the radicals $R^1$ are $(R^2R^2)N-(CH_2)_n-$ radicals, the radicals $R^2$ are hydrogen atoms or $(R^3R^3)N-(CH_2)_n$ radicals,
the radicals $R^3$ are hydrogen atoms or $(R^4R^4)N-(CH_2)_n-$ radicals,
the radicals $R^4$ are hydrogen atoms or $(R^5R^5)N-(CH_2)_n-$ radicals,
the radicals $R^5$ are hydrogen atoms or $(R^6R^6)N-(CH_2)_n-$ radicals,
the radicals $R^6$ are hydrogen atoms,
n is 2, 3 or 4, and
the radical X is one of the radicals

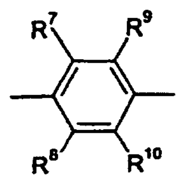
,
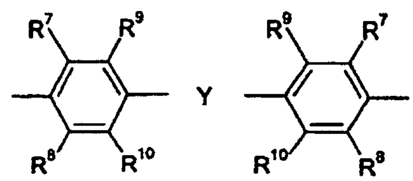
.

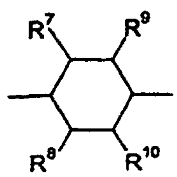
,
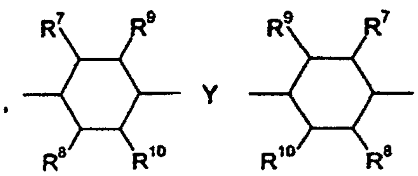

$-(CH_2)_p-$, $-(CH_2)_3-NR^{11}-(CH_2)_3-$, $-(CH_2)_1-[O-(CH_2)_k]_m-O-(CH_2)_1-C_{2-20}$-alkylene,
the radical Y is an oxygen atom, a $CR^7R^9C=O$ or $SO_2$ radical,
p is an integer from 2-20,
1 and k are, independently of one another, an integer from 2-6, m is an integer from 1-40,
the radicals $R^7$, $R^8$, $R^9$ and $R^{10}$ are, independently of one another, hydrogen atoms or $C_{1-6}$-alkyl radicals, and the radical $R^{11}$ is $C_{1-20}$-alkyl, $C_{2-20}$-dialkylamino-$C_{2-10}$-alkyl, $C_{1-10}$-alkoxy-$C_{2-10}$-alkyl, $C_{2-20}$-hydroxyalkyl, $C_{3-12}$-cycloalkyl, $C_{4-20}$-cycloalkylalkyl, $C_{2-20}$-alkenyl, $C_{4-30}$-dialkylaminoalkenyl, $C_{3-30}$-alkoxyalkenyl, $C_{3-20}$-hydroxyalkenyl, $C_{5-20}$-cycloalkylalkenyl, an aryl or a $C_{7-20}$-arylalkyl radical which is unsubstituted or substituted one to five times by $C_{1-8}$-alkyl, $C_{2-8}$-dialkylamino, $C_{1-8}$-alkoxy, hydroxyl, $C_{3-8}$-cycloalkyl and/or $C_{4-12}$-cycloalkylalkyl, or two radicals $R^{11}$ together form an alkylene chain which may be interrupted by nitrogen or oxygen, such as from ethylene oxide, propylene oxide, butylene oxide and $-CH_2-CH(CH_3)-O-$ or polyisobutylene with 1 to 100 isobutylene units,
with at least one bisglycidyl ether of a polyethylene glycol with a weight average molecular weight of from 300 to 3000 as crosslinker (b).

2. A water-soluble crosslinked product as claimed in claim 1, in which the amine of the formula (II) is N,N,N',N'-tetraaminopropyl-1,2-ethylenediamine.

3. The use of crosslinked nitrogenous compounds which are soluble or dispersible in water and are obtainable by crosslinking of

(a) compounds containing at least three NH groups, selected from amines of the formula (II) as claimed in claim 1 or polyethyleneimine with a degree of polymerization of from 5 to 100, with

(b) bisglycidyl ethers of a polyethylene glycol with a weight average molecular weight of from 300 to 3000 as crosslinkers which react with NH groups,

in detergents and cleaners as soil release agents and/or enzyme stabilizers.

4. The use as claimed in claim 3, wherein the compound (a) is N,N,N',N'-tetraaminopropyl-1,2-ethylenediamine.

5. A detergent or cleaner comprising at least one crosslinked nitrogenous compound as defined in either of claims

3 and 4, and at least one surfactant.

6. A detergent or cleaner as claimed in claim 5, additionally comprising at least one enzyme.

**Revendications**

1. Produit de réticulation soluble dans l'eau, pouvant être obtenu par réticulation d'amines de formule générale (II)

$$(R^1R^1)N\text{-}X\text{-}N(R^1R^1) \quad \text{(II)}$$

dans laquelle
les radicaux R' sont des radicaux $(R^2R^2)N\text{-}(CH_2)_n\text{-}$,
les radicaux $R^2$ sont des atomes d'hydrogène ou des radicaux $(R^3R^3)N\text{-}(CH_2)_n\text{-}$,
les radicaux $R^3$ sont des atomes d'hydrogène ou des radicaux $(R^4R^4)N\text{-}(CH_2)_n\text{-}$,
les radicaux $R^4$ sont des atomes d'hydrogène ou des radicaux $(R^5R^5)N\text{-}(CH_2)_n\text{-}$,
les radicaux $R^5$ sont des atomes d'hydrogène ou des radicaux $(R^6R^6)N\text{-}(CH_2)_n\text{-}$,
les radicaux $R^6$ sont des atomes d'hydrogène,
n vaut 2, 3 ou 4, et
le radical X est l'un des radicaux

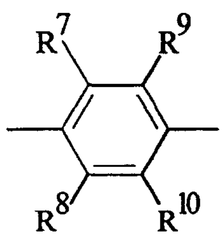

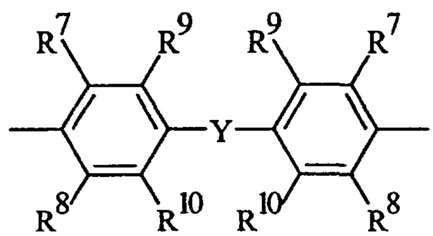

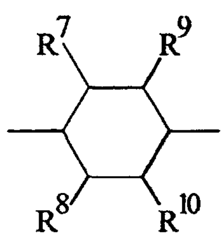

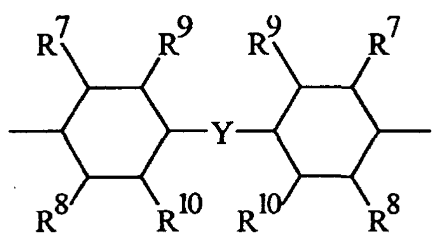

$-(CH_2)_p-$, $(CH_2)_3\text{-}NR^{11}\text{-}(CH_2)_3\text{-}$, $-(CH_2)_l\text{-}[O\text{-}(CH_2)_k]_m\text{-}O\text{-}(CH_2)_l$-alkylène en $C_{2\text{-}20}$,
le radical Y est un atome d'oxygène, un radical $CR^7R^9C{=}O$ ou $SO_2$,
p est un nombre entier valant 2 à 20,
l et k représentent chacun indépendamment de l'autre un nombre entier de 2 à 6,
m est un nombre entier de 1 à 40,
les radicaux $R^7$, $R^8$, $R^9$ et $R^{10}$ représentent chacun indépendamment des autres un atome d'hydrogène ou un radical alkyle en $C_{1\text{-}6}$,
et le radical $R^{11}$ est un radical alkyle en $C_{1\text{-}20}$, un radical di(alkyle en $C_{2\text{-}20}$)amino-(alkyle en $C_{2\text{-}10}$), un radical (alcoxy en $C_{1\text{-}10}$)(alkyle en $C_{2\text{-}10}$), un radical hydroxyalkyle en $C_{2\text{-}20}$, un radical cycloalkyle en $C_{3\text{-}12}$, un radical cycloalkylalkyle en $C_{4\text{-}20}$, un radical alkylène en $C_{2\text{-}20}$, un radical dialkylaminoalcényle en $C_{4\text{-}30}$, un radical alcoxyalkylène en $C_{3\text{-}30}$, un radical hydroxyalcényle en $C_{3\text{-}20}$, un radical cycloalkylalcényle en $C_{5\text{-}20}$, un radical aryle ou aralkyle en $C_{7\text{-}20}$ éventuellement une à cinq fois substitué par des radicaux alkyle en $C_{1\text{-}8}$, des radical dialkylamino en $C_{2\text{-}8}$, des radicaux alcoxy en $C_{1\text{-}8}$, des radicaux hydroxyle, des radicaux cycloalkyle en $C_{3\text{-}8}$, des radicaux cycloalkylalkyle en $C_{4\text{-}12}$, ou encore deux radicaux $R^{11}$ forment ensemble une chaîne alkylène éventuellement interrompue par un atome d'azote ou d'oxygène, comme par exemple l'oxyde d'éthylène, l'oxyde de propylène, l'oxyde de butylène et $-CH_2\text{-}CH(CH_3)\text{-}O\text{-}$, ou un polyisobutylène ayant de 1 à 100 motifs isobutylène,
avec au moins un éther bisglycidylique d'un polyéthylèneglycol ayant une masse moléculaire moyenne en

masse de 300 à 3000, servant d'agent de réticulation (b).

**2.** Produit de réticulation soluble dans l'eau selon la revendication 1, dans lequel l'amine de formule générale (II) est la N,N,N',N'-tétraaminopropyl-1,2-éthylènediamine.

**3.** Utilisation de composés azotés réticulés, solubles dans l'eau ou dispersibles dans l'eau, pouvant être obtenus par réticulation

(a) de composés contenant au moins trois groupes NH, choisis parmi les amines de formule générale (II) selon la revendication 1 ou une polyéthylène-imine ayant un degré de polymérisation de 5 à 100,
(b) avec des éthers bisglycidyliques d'un polyéthylèneglycol ayant une masse moléculaire moyenne en masse de 300 à 3000 et servant d'agents de réticulation, qui réagissent avec les groupes NH,

dans des produits détergents et nettoyants, en tant qu'agents d'enlèvement des salissures et/ou stabilisants d'enzymes.

**4.** Utilisation selon la revendication 3, **caractérisée en ce que** le composé (a) est la N,N,N',N'-tétraaminopropyl-1,2-éthylènediamine.

**5.** Produit détergent et nettoyant contenant au moins un composé azoté réticulé tel que défini dans l'une des revendications 3 ou 4, et au moins un tensioactif.

**6.** Produit détergent et nettoyant selon la revendication 5, qui en outre contient au moins une enzyme.